# EUROPÄISCHE PATENTSCHRIFT

(11) **EP 3 454 774 B1**
(45) Veröffentlichungstag und Bekanntmachung des Hinweises auf die Patenterteilung: **04.11.2020**
(21) Anmeldenummer: 17721722.1
(22) Anmeldetag: 08.05.2017
(51) Int. Cl.: A61C 7/20, A61C 7/28

(54) **VORRICHTUNG ZUR KORREKTUR VON ZAHNFEHLSTELLUNGEN SOWIE VERFAHREN ZUR HERSTELLUNG EINES BOGENELEMENTS FÜR EINE SOLCHE VORRICHTUNG**
DEVICE FOR CORRECTING MISALIGNED TEETH AND METHOD OF MANUFACTURING AN ARC ELEMENT FOR SUCH A DEVICE
DISPOSITIF DE CORRECTION DE LA MAUVAISE POSITION DES DENTS ET PROCÉDÉ DE FABRICATION D'UN ÉLÉMENT D'ARC POUR UN TEL DISPOSITIF

(30) Priorität: 10.05.2016 DE 102016108630
(43) Veröffentlichungstag der Anmeldung: 20.03.2019
(73) Patentinhaber: Schumacher, Pascal Roman, 50996 Köln (DE); Jo, Yong-Min, 40227 Düsselddorf (DE)
(72) Erfinder: Schumacher, Pascal Roman, 50996 Köln (DE); Jo, Yong-Min, 40227 Düsselddorf (DE)
(74) Vertreter: Pellengahr, Maximilian Rudolf
(86) Internationale Anmeldenummer: PCT/EP2017/060940
(87) Internationale Veröffentlichungsnummer: WO 2017/194478

(56) Entgegenhaltungen:
- EP-A1- 3 320 876
- EP-A1- 3 342 367
- WO-A1-2015/178655
- WO-A1-2017/007079
- CN-U- 203 226 911
- DE-A1-102013 204 359
- DE-A1-102013 204 359
- US-A- 4 479 779
- US-A- 5 624 258
- US-A1- 2008 254 403

## Beschreibung

### Einleitung

Die vorliegende Anmeldung betrifft eine Vorrichtung zur Korrektur von Zahnfehlstellungen, umfassend ein Bogenelement und mindestens zwei Übertragungselemente, wobei jedes der Übertragungselemente dazu geeignet ist, mit einer Zahnoberfläche zusammenzuwirken und einen Kopplungsbereich aufweist, in dem das jeweilige Übertragungselement mit dem Bogenelement in Kraft übertragender Weise koppelbar oder gekoppelt ist, wobei das Bogenelement global betrachtet eine parabolische, einer Form eines Unterkiefers oder eines Oberkiefers folgende, gekrümmte Form aufweist, wobei das Bogenelement mindestens einen Aktivierungsabschnitt aufweist, der zwischen zwei benachbarten Übertragungselementen angeordnet und derart ausgeformt ist, dass das Bogenelement in einem eingebauten Zustand der Vorrichtung, in dem es mit den Übertragungselementen gekoppelt ist, zumindest lokal elastisch verformt ist, sodass in dem Bogenelement eine Rückstellkraft wirkt, die mittels der Kopplung auf die Übertragungselemente übertragbar ist, wobei das Bogenelement mindestens ein Formschlusselement umfasst, mittels dessen das Bogenelement derart formschlüssig mit einem jeweiligen Übertragungselement zusammenwirkt, dass eine Relativbewegung des Bogenelements und des jeweiligen Übertragungselements zueinander in - im Kopplungsbereich des Übertragungselements betrachtet - längsachsparallele Richtung des Bogenelements blockiert ist, wobei das Bogenelement in mindestens einem Aktivierungsabschnitt in Form einer Schlaufe oder mäanderförmig ausgebildet ist, sodass das Bogenelement in dem Aktivierungsabschnitt als Feder wirken kann.

Weiterhin betrifft die vorliegende Anmeldung ein Verfahren zur Herstellung eines Bogenelements für eine Vorrichtung zur Korrektur von Zahnfehlstellungen, umfassend die folgenden Verfahrensschritte:
a) Die Stellung einer Mehrzahl von Zähnen des Unterkiefers des Oberkiefers eines Patienten wird erfasst.
b) Unter Nutzung der erfassten Stellung der Zähne wird in ein digitales Modell der Zähne erstellt.
c) Anhand des digitalen Modells wird ein Bogenelement für die Vorrichtung virtuell entworfen.
d) Das virtuell entworfene Bogenelement wird computergesteuert derart in einem Stück hergestellt, dass es nach seiner Fertigstellung zumindest im Wesentlichen seine schlussendliche Form aufweist, in der es für die Vorrichtung nutzbar ist.

Bei Vorrichtungen zur Korrektur von Zahnfehlstellungen handelt es sich typischerweise um sogenannte "Zahnspangen", die insbesondere jungen Patienten zur Behandlung von Zahnfehlstellungen eingesetzt werden. Bei den hier behandelten Vorrichtungen handelt es sich in aller Regel um festsitzende Einrichtungen, die über die Behandlungsdauer des jeweiligen Patienten hinweg permanent im Mund des Patienten verbleiben und nicht, beispielsweise über Nacht, aus dem Mund entnommen werden. Mittels derartiger Vorrichtungen ist es möglich, Zähne im Unterkiefer oder Oberkiefer zu bewegen, das heißt um ihre Hochachse und/oder Querachsen zu verdrehen und/oder translatorisch zu bewegen.

Unter einem "Bogenelement" wird im Sinne der vorliegenden Anmeldung dasjenige Element einer Zahnspange verstanden, dass die einzelnen Zähne bzw. die darauf angeordneten Übertragungselemente miteinander verbindet. Da die Zähne sowohl des Unterkiefers als auch des Oberkiefers in einer im Allgemeinen parabolischen Form entlang des Kiefers angeordnet sind, weist auch das Bogenelement einer hier behandelten Vorrichtung - global gesehen - eine entsprechende Form auf. Bekannte Bogenelemente sind in aller Regel von Metall, insbesondere von Stahl, gebildet. Es handelt sich dabei typischerweise um händisch oder automatisch gebogene Drahtsegmente, die für eine jeweilige Behandlungssituation individuell angepasst sind.

Unter "Übertragungselementen" werden im Sinne der vorliegenden Anmeldung solche Elemente verstanden, die zur Übertragung von Kräften zwischen dem Bogenelement und dem jeweils anliegenden Zahn bzw. den jeweils anliegenden Zähnen dienen. In der Technik werden diese Übertragungselemente häufig auch als sogenannte "Brackets" bezeichnet. Die Übertragungselemente wirken in Kraft übertragender Weise, insbesondere unter Verwendung eines Reibschlusses, mit dem jeweiligen Bogenelement zusammen. Eine spezielle Ausformung der Übertragungselemente ermöglicht es dem behandelnden Kieferorthopäden dem jeweiligen Zahn, mit dem das Übertragungselement zusammenwirkt, eine gewünschte Bewegung aufzuprägen.

Weiterhin wird im Sinne der vorliegenden Anmeldung unter einem "Aktivierungsabschnitt" ein solcher Abschnitt des Bogenelements verstanden, mittels dessen selbiger "aktiviert" wird, das heißt in die Lage versetzt wird, mittels Wirkung einer Rückstellkraft (genauer: Rückstellkraft und/oder Rückstellmoment) einen Einfluss auf das bzw. die jeweils angrenzenden Übertragungselemente und folglich auf einen jeweils zu behandelnden Zahn auszuüben. Ein derartiger Aktivierungsabschnitt ist typischerweise als sogenanntes "Loop" ausgeführt. Bei einem solchen Loop handelt es sich in aller Regel um eine Art in das Bogenelement eingebrachten "Umweg", der ein Längenreservoir des Bogenelements vorhält, sodass das Bogenelement in diesem Bereich beispielsweise gedehnt oder gestaucht werden kann. Das Loop übernimmt so die Funktion einer Feder. Eine in dem Aktivierungsabschnitt gespeicherte Kraftinformation kann sodann mittels der Kopplung zwischen dem Bogenelement und den Übertragungselementen schließlich auf die Zähne übertragen werden. Hierbei versteht es sich, dass eine Verformung des Bogenelements zumindest in dem oder den Aktivierungsabschnitten zumindest einen elastischen Anteil haben muss, sodass sich in dem Bogenelement eine Rückstellkraft ausbildet.

Unter einem "Formschlusselement" wird im Sinne der vorliegenden Anmeldung jede Art von Element verstanden, mittels dessen ein Formschluss zwischen dem Bogenelement und einem jeweils zugehörigen Übertragungselement herstellbar ist. Dabei kommt es erfindungsgemäß darauf an, dass der erzielte Formschluss eine längsachsparallele Bewegung des Bogens relativ zu dem jeweiligen Übertragungselement mittels des Formschlusses blockiert. Mit anderen Worten sind Elemente, die zwar einen Formschluss zwischen Bogenelement und Übertragungselement herstellen, diesen Formschluss jedoch lediglich beispielsweise in eine Richtung senkrecht zu der Längsachse des Bogenelements blockieren, zwar grundsätzlich als Formschlusselemente im Sinne der vorliegenden Anmeldung auffassbar, für die Lösung der vorliegenden Aufgabe jedoch alleine nicht hilfreich. Insoweit erfüllt eine klassische Ligatur nicht die Anforderungen der Erfindung, da sie keinen Formschluss in längsachsparallele Richtung des Bogenelements herstellt.

Unter einem Formschlusselement kann beispielsweise eine herausstehende Nase, eine hinterschnittene Feder (beispielsweise zum Eingriff in eine hinterschnittene Nut) und dergleichen verstanden werden. Die unten aufgeführten Ausführungsbeispiele geben hierzu einen beispielhaften, nicht abschließenden Überblick.

Unter einem "Blockieren" einer Relativbewegung wird im Sinne der vorliegenden Anmeldung verstanden, dass das Auftreten eines unbeabsichtigten Schlupfes zwischen dem Bogenelement und dem Übertragungselement mittels des Formschlusselements unterbunden ist. Hierbei kommt es erfindungsgemäß auf den technischen Erfolg an, dass mittels des Bogenelements ausgeübte Kräfte möglichst verlustfrei an das bzw. die Übertragungselemente übergeben werden. Hierbei ist es beispielsweise unschädlich, wenn aufgrund einer Fertigungstoleranz vor der Herstellung eines Kraft übertragenden Anschlags zwischen dem Bogenelement und dem jeweiligen Übertragungselement das entsprechende Formschlusselement zunächst eine Anschlagstrecke (beispielsweise 0,1 mm) zurücklegen muss, bevor es tatsächlich mit dem Übertragungselement eingreift und Kräfte übertragen kann. Auch sind elastische Verformungen der involvierten Materialien zu vernachlässigen.

Bezug nehmend auf das beschriebene Verfahren wird unter einer "Erfassung" der Stellung von Zähnen in aller Regel ein Scanvorgang verstanden. Ein derartiger Scanvorgang kann beispielsweise intraoral erfolgen, wobei ein entsprechender Intraoralscanner zum Einsatz kommt. Mittels einer solchen Vorrichtung kann eine Bildinformation über Zähne des zu behandelnden Patienten erfasst werden, wobei diese Bildinformationen sodann typischerweise in einer digitalen Form vorliegen. Am Ende der Erfassung steht in jedem Fall eine digitale Information über die Stellung der Zähne im Moment der Erfassung.

In diesem Zusammenhang wird unter einem "digitalen Modell" im Sinne der vorliegenden Anmeldung ein solches Modell verstanden, dass lediglich virtuell besteht, insbesondere im Rahmen einer CAD-Software. Ein solches digitales Modell stellt eine virtuelle Nachbildung der zuvor erfassten Zähne des zu behandelnden Patienten dar. In aller Regel erfolgt die Erfassung der Zähne derart detailliert, dass das digitale Modell der erfassten Zähne bzw. deren jeweilige Stellung mit hoher Genauigkeit den realen Gegebenheiten bei dem zu behandelnden Patienten entspricht.

Mittels eines solchen digitalen Modells kann sodann ein Bogenelement virtuell entworfen werden. Das Bogenelement wird in diesem Verfahrensschritt folglich nicht tatsächlich real, beispielsweise mittels eines Biegevorgangs aus einem Drahtsegmente und in Anpassung nach einem *trial and error*-Prinzip, sondern lediglich virtuell, insbesondere mittels einer CAD-Software, erstellt. Da es sich bei der Vorrichtung gemäß der vorliegenden Anmeldung um eine sogenannte "aktive kieferorthopädische Vorrichtung" handelt, mittels derer bewusst Kräfte auf die zu behandelnden Zähne ausgeübt werden sollen, versteht es sich, dass der Bogen nicht exakt an die aktuellen Gegebenheiten des zu behandelnden Gebisses angepasst wird, sondern bereits im Hinblick auf eine jeweils gewünschte Endposition der Zähne geformt wird. Insbesondere ist es denkbar, eine Mehrzahl von Bögen zu entwerfen, wobei jeder einzelne einen Teilerfolg auf dem Weg von der anfänglichen Zahnstellung zu der gewünschten "Endstellung" der Zähne erzielen kann. Eine derartige Behandlung wird folglich in einer Mehrzahl einzelner Steps durchgeführt.

Das digitale Modell, das zumindest im Wesentlichen den tatsächlichen Bedingungen im Moment der Behandlung der zu behandelnden Zähne entspricht, wird virtuell in ein sogenannte "Set-up Modell" überführt, das eine individuelle Wunschkonfiguration der zu behandelnden Zähne nach erfolgreichem Abschluss der kieferorthopädischen Behandlung wiedergibt. Der Bogen, vorzugsweise eine Mehrzahl von Bögen, wird bzw. werden anhand des Set-up Modells bzw. einzelner Zwischenstufen zwischen dem digitalen (Ausgangs-)Modell und dem Set-up Modell ("Endmodell") erstellt.

Die Erstellung eines Bogens "anhand des digitalen Modells" ist folglich im Sinne der vorliegenden Anmeldung dahingehend zu verstehen, dass das digitale Modell der jeweiligen Zähne, das gewissermaßen die Ausgangssituation der zu behandelnden Zähne wiedergibt, als Ausgangspunkt für den Entwurf des Bogens genutzt wird, der Bogen jedoch nicht unmittelbar an das digitale Modell angepasst sein muss (und in aller Regel auch nicht sein wird).

### Stand der Technik

Vorrichtungen sowie Verfahren der eingangs beschriebenen Art sind im Stand der Technik bereits bekannt. In der Fachsprache wird diese Technik, die ein Bogenelement mit mindestens einem vorstehend beschriebenen Aktivierungsabschnitt verwendet, auch unter dem Namen *standard edgewise technique* geführt.

Beispielsweise offenbart die europäische Patentanmeldung EP 2 204 136 A2 eine gattungsgemäße Vorrichtung sowie ein gattungsgemäßes Verfahren zu deren Herstellung. Dieses Dokument zeigt ein Verfahren, bei dem mittels eines intraoralen Scanners die Stellung von Zähnen eines Patienten erfasst wird. Die so erfassten Daten werden mittels einer Datenverarbeitungsanlage bearbeitet, wobei virtuell eine Stellung der Zähne verändert wird. Die Veränderung der Stellung der einzelnen Zähne erfolgt in der Art, dass schlussendlich eine Zielstellung der Zähne vorliegt, die die Stellung der Zähne nach Beendigung der Behandlung des jeweiligen Patienten symbolisiert.

Mittels der offenbarten Technik ist es möglich, ein Bogenelement einer zugehörigen Zahnspange virtuell zu entwerfen und sodann automatisch mittels einer Biegemaschine herstellen zu lassen. Dies hat den besonderen Vorteil, dass eine händische Biegung, wie sie im Stand der Technik häufig unmittelbar von dem jeweils behandelnden Kieferorthopäden vorgenommen wird, entfallen kann. Dies ist zum einen im Hinblick auf die Präzision der Bearbeitung des jeweiligen Bogenelements und zum anderen hinsichtlich der im Zusammenhang mit der Herstellung eines Bogenelements anfallenden Kosten vorteilhaft. Der Vorteil in der Präzision der Herstellung des jeweiligen Bogens liegt insbesondere darin, dass die Behandlung der jeweiligen Zahnfehlstellungen genauer erfolgen kann, das heißt insbesondere die auf die Zähne wirkenden Kräfte, die mittels des Bogenelements ausgeübt werden, genauer vorhergesagt werden können.

Um das Bogenelement zu aktivieren, wird in selbiges mindestens ein Aktivierungsabschnitt eingebracht, der gemäß dem genannten Dokument beispielsweise als Loop ausgeführt sein kann. Wie vorstehend beschrieben, ist es mittels derartiger Loops möglich, dem Bogenelement im Zuge des Einbaus desselben eine Verformungsinformation aufzuprägen, wobei sich das Bogenelement im Bereich des Aktivierungsabschnitts elastisch verformt, sodass in dem Bogenelement eine Rückstellkraft gespeichert wird. Diese Rückstellkraft wirkt sodann nach der Kopplung des Bogenelements mit den Übertragungselementen auf die Zähne und führt folglich zu deren Bewegung.

Für diese Übertragung der in dem Bogenelement gespeicherten Kraftinformation ist es notwendig, dass eine kraftübertragende Verbindung zwischen dem Bogenelement und den Übertragungselementen hergestellt wird. Eine solche Verbindung wird im Stand der Technik in der Regel mittels einer sogenannten "Ligatur" hergestellt. Hierbei handelt es sich um ein separates, im Zuge des Einsetzens des Bogenelements in die zugehörigen Übertragungselemente einzubauendes Verbindungsmittel. Eine Ligatur kann beispielsweise aus einem dünnen Draht oder einem Gummi bestehen, der um entsprechende Verankerungselemente an den Übertragungselementen gewickelt wird, wobei das jeweilig an das Übertragungselement angelegte Bogenelement gegen das Übertragungselement gedrückt wird, sodass sich ein Kraft übertragender Reibschluss ergibt.

Die Ligatur verhindert zudem, dass das Bogenelement von einem jeweiligen Übertragungselement abgelöst wird. Ein typisches Übertragungselement kann beispielsweise über einen sogenannten Bracketslot verfügen, in den das Bogenelement eingesetzt wird. Um ein Herausrutschen des Bogenelements aus dem Bracketslot zu verhindern, wird nach dem Einsetzen des Bogenelements die Ligatur aufgebracht.

Um eine Kraftübertragung zwischen dem Bogenelement und den zugehörigen Übertragungselement bewirken zu können, die eine Bewegung des jeweilig zugehörigen Zahns entlang des Kieferknochens, das heißt nach vorne oder nach hinten, bewirken kann, ist es erforderlich, eine Kraftübertragung zwischen dem Bogenelement und dem Übertragungselement bzw. den Übertragungselementen in eine längsachsparallele Richtung des Bogenelements herzustellen. Der Begriff "längsachsparallel" ist in diesem Zusammenhang bezogen auf eine lokale Stelle des Bogenelements zu verstehen. Es versteht sich nämlich, dass eine Längsachse eines parabolischen Bogenelements gleichermaßen parabolisch ist, wobei in Abhängigkeit einer lokalen Krümmung des Bogenelements die Längsachse gleichfalls eine entsprechende Krümmung aufweist. Somit ist der Begriff der "Längsachse" im Zusammenhang mit dem Bogenelement hier nicht im mathematischen Sinne einer "Achse" zu verstehen, die in jedem Falle gerade wäre.

Mittels der bekannten Verbindungstechnik zwischen einem Bogenelement und zugehörigen Übertragungselementen unter Verwendung der vorstehend beschriebenen Ligatur ist eine Kraftübertragung in längsachsparallele Richtung des Bogenelements mittels des beschriebenen Reibschlusses möglich. Mit anderen Worten wird das Bogenelement mittels der Ligatur gegen das Übertragungselement, beispielsweise in den Bracketslot eines Brackets, gedrückt, sodass zwischen dem Bogenelement und dem Übertragungselement eine Reibkraft wirken kann. Diese ermöglicht es nunmehr, eine längsachsparallele Kraft zwischen dem Bogenelement und dem Übertragungselement zu übertragen.

Diese bekannte Art der kraftübertragenden Verbindung hat den Nachteil, dass regelmäßig ein gewisser Schlupf zwischen den Elementen auftritt. Mit anderen Worten kann die Kraft, die in dem Bogenelement gespeichert ist, nicht vollständig in die Übertragungselemente eingebracht werden, sodass zumindest ein Teil dieser Kraft aufgrund eines Schlupfs zwischen dem Bogenelement und den jeweiligen Übertragungselementen zumindest einen Teil der elastischen Verformung des Bogenelements abbaut und somit ein bestimmter Kraftanteil gewissermaßen "verpufft". Dies führt dazu, dass eine präzise Bestimmung der jeweils auf einen Zahn mittels einer Zahnspange aufgebrachten Kräfte faktisch kaum möglich ist. Entsprechend fällt es schwer, eine kieferorthopädische Behandlung vollständig vor Behandlungsbeginn planen zu können, da der Behandlungsplan im Zweifel in Abhängigkeit des Behandlungsverlaufs verändert und angepasst werden muss. Ebenfalls ist es kaum möglich, vorherzusagen, welche Kräfte tatsächlich in der aktiven kieferorthopädischen Vorrichtung "gespeichert" bzw. in diese eingebracht werden müssen, um eine bestimmte Kraft auf die Zähne auszuüben, damit eine jeweils gewünschte Bewegung dieser Zähne erreicht wird. Eine Aussage über den zu erwarten Kraftverlust zwischen dem Bogen und den Zähnen ist nämlich nicht möglich.

Die mangelnde Genauigkeit kann zum Beispiel darin resultieren, dass Zähne versehentlich zu viel oder zu wenig bewegt werden und das Behandlungsverfahren sich daraufhin in vielen, ansonsten vermeidbaren, Iterationsschritten an das gewünschte Endergebnis herantasten muss.

Eine Lösung für dieses Problem ergibt sich aus der Deutschen Patentanmeldung DE 10 2015 009 345 A1. Diese beschreibt ein Bogenelement, das mittels klammerartiger Befestigungselemente an zugehörigen Übertragungselementen angeschlossen ist. Die Befestigungselemente umgreifen einen komplementären Befestigungsabschnitt der Übertragungselemente an allen Seiten, sodass eine Relativbewegung zwischen Bogenelement und Übertragungselement in alle Richtungen blockiert ist.

Das im Stand der Technik beschriebene Bogenelement hat jedoch den Nachteil, dass dessen Herstellung besonders aufwendig ist, was durch die Geometrie des Bogenelements bedingt ist. Dies hat zur Folge, dass die in besagter Patentanmeldung offenbarten Bogenelemente kaum wirtschaftlich herstellbar sind.

Eine Vorrichtung zur Korrektur von Zahnfehlstellungen mit einem ebenen Bogendraht und Brackets zur Befestigung an Zähnen ist aus US 5 624 258 A bekannt.

### Aufgabe

Der vorliegenden Anmeldung liegt die Aufgabe zugrunde, eine Vorrichtung zur Korrektur von Zahnfehlstellungen hervorzubringen, mittels derer es möglich ist, zu behandelnde Zähne möglichst effizient und schonend zu behandeln, und deren Herstellung gegenüber dem Stand der Technik vereinfacht ist.

### Lösung

Die zugrunde liegende Aufgabe wird ausgehend von einer Vorrichtung der eingangs beschriebenen Art erfindungsgemäß durch eine Vorrichtung nach Anspruch 1 gelöst, in der das Bogenelement so ausgeführt ist, dass sich eine Längsachse des Bogenelements - zumindest in einem Kraftfreien Zustand des Bogenelements - innerhalb einer Ebene erstreckt. Mit anderen Worten ist das Bogenelement erfindungsgemäß derart plan ausgebildet, dass es sich bei Auflegen auf eine ebene Platte entlang seiner gesamten Längsachse in Kontakt mit der Platte befinden würde. Ein derartiges Bogenelement kann auch als "2D-Bogen" bezeichnet werden, da sich die Längsachse des Bogenelements in einem zweidimensionalen Raum erstreckt.

Die erfindungsgemäße Vorrichtung hat viele Vorteile. Zunächst ist es mittels des mindestens einen Formschlusselements möglich, eine unmittelbare Kraftübertragung zwischen dem Bogenelement und dem jeweiligen Übertragungselement herstellen zu können. Dies führt dazu, dass die mittels des Bogenelements ausgeübte Kraft verlustfrei und gezielt auf das gewünschte Übertragungselement und schließlich mittels des Übertragungselements auf den zu bewegenden Zahn übertragen wird.

Aufgrund des Formschlusses ist es mithin für den behandelnden Kieferorthopäden möglich, die auf den jeweiligen Zahn ausgeübte Kraft präzise bestimmen zu können. Dem liegt die Überlegung zugrunde, dass in Kenntnis der Geometrie des Bogenelements sowie von dessen Materialeigenschaften die Kraft, die infolge einer elastischen Verformung des Bogenelements von selbigem später in Form der zugehörigen Rückstellkraft auf das angeschlossene Übertragungselement ausgeübt wird, genau bestimmbar ist. Es ist folglich mittels des Formschlusses dem behandelnden Kieferorthopäden möglich, die gewünschte Kraft genau einzustellen, beispielsweise auf genau 0,1 N. Eine derart präzise Bestimmung der mittels eines Bogenelements übertragenen Kraft ist mit heutigen Mitteln nicht denkbar.

Die Schwierigkeit besteht bisher insbesondere darin, ein entsprechendes Formschlusselement genau an der richtigen Position des Bogenelements anzuordnen, sodass dessen Eingriffsposition zum Eingriff mit dem Übertragungselement exakt mit der gewünschten Auslenkung des Bogenelements korrespondiert, die der gewünschten, auszuübenden Rückstellkraft entspricht. Mit anderen Worten ist die Herstellung eines solchen Bogenelements besonders schwierig, da im Vorhinein der Herstellung bereits klar sein muss, an welcher Stelle das bzw. die Formschlusselemente platziert sein sollen, um sodann beim Einbau des Bogenelements genau die gewünschte Kraftwirkung auf die zu behandelnden Zähne zu haben. Diese Problematik der Herstellung wird nachstehend im Zusammenhang mit dem erfindungsgemäßen Herstellungsverfahren genauer behandelt. Mittels heute gängiger Biegeverfahren (manuell oder automatisch) ist ein solcher Erfolg jedenfalls nicht erzielbar.

Weiterhin hat die erfindungsgemäße Vorrichtung den besonderen Vorteil, dass sie besonders einfach herstellbar ist, da sie auf komplizierte dreidimensionale Geometrien, wie sie im Stand der Technik verwendet werden, verzichtet. Die Besonderheit besteht darin, den bzw. die Aktivierungsabschnitt(e) gleichermaßen innerhalb der Ebene auszubilden. Das heißt, dass etwaige Loops oder Schlaufen nicht die Ebene des Bogenelements verlassen, sondern innerhalb der Ebene ausgebildet sind.

Insbesondere kann bei der erfindungsgemäßen Vorrichtung das Bogenelement aus einem Blech herausgearbeitet werden, sodass das Bogenelement unmittelbar seine schlussendliche Form aufweist. Letzteres ist - ebenso wie das plane Blech - schließlich zweidimensional. Ein entsprechendes Herstellverfahren ist in Anspruch 9 definiert und ist gleichermaßen Gegenstand der vorliegenden Anmeldung und ist nachstehend gesondert erläutert.

Typische Bogenelemente, die für die erfindungsgemäße Vorrichtung besonders vorteilhaft sind, weisen einen viereckigen, insbesondere quadratischen, Querschnitt auf, wobei die Kantenlängen eines eckigen Querschnitts sich typischerweise im Bereich von maximal 1,0 mm, vorzugsweise maximal 0,6 mm, weiter vorzugsweise maximal 0,5 mm, bewegen. Neben eckigen Querschnitten sind auch kreisförmige und elliptische Querschnitte denkbar.

Weiterhin ist es vorteilhaft, wenn mindestens ein Formschlusselement, vorzugsweise sämtliche Formschlusselemente, einstückig an dem Bogenelement ausgebildet sind. Auf diese Weise entfällt eine individuelle Positionierung der Formschlusselemente an dem Bogenelement, was zum einen eine versehentlich falsche Positionierung ausschließt und zum anderen das Problem der Herstellung einer ihrerseits möglichst schlupffreien Verbindung zwischen dem Bogenelement und dem Formschlusselement, die zum Erfolg der Erfindung sichergestellt sein müsste, vermeidet.

In einer vorteilhaften Ausgestaltung der erfindungsgemäßen Vorrichtung ist das Bogenelement von einem Formgedächtnismaterial, insbesondere von einer Nickel-Titan-Legierung, weiter vorzugsweise von Nitinol, gebildet. Dies kann auch unabhängig von der Verwendung der vorstehend beschriebenen Formschlusselemente von Vorteil sein. Bei Formgedächtnismaterialien handelt es sich um sogenannte "superelastische Materialien", die sich durch eine besonders ausgeprägte Elastizität auszeichnen. Durch diese Elastizität bedingt ist es kaum möglich, Gegenstände, die aus einem Formgedächtnismaterial bestehen, plastisch zu verformen. Die konkrete Auswahl von einer Nickel-Titan-Legierung hat zudem den Vorteil, dass letztere eine hohe Biokompatibilität und zudem typischerweise einen vergleichsweise geringen E-Modul von ca. 40.000 N/mm² aufweist. Letzteres hat den Vorteil, dass die sich in dem Bogenelement infolge einer Verformung einstellenden Rückstellkräfte gut kontrollierbar sind und vor allem nicht bereits bei sehr geringen Verformungen sehr hoch ausfallen. Die Kräfte nämlich, die zur Behandlung von Zahnfehlstellungen notwendig sind, bewegen sich pro Zahn in der Regel im Bereich von ca. 1 N, mitunter sogar deutlich darunter.

Die Superelastizität hat weiterhin den Vorteil, dass die in das Bogenelement im Zuge des Einbaus eingeprägte Verformung zumindest fast vollständig, idealerweise zu 100 %, eine elastische Verformung darstellt und somit keinen oder nur vernachlässigbar kleinen plastischen Anteil aufweist. Die Abwesenheit plastischer Verformungsanteile lässt den Schluss zu, dass sämtliche aufgebrachte Verformung eine elastische Verformung darstellt und folglich eine entsprechende Rückstellkraft in dem Bogenelement auslöst. Dies führt im Ergebnis wiederum zu dem Vorteil, dass die mittels des Bogenelements aufzubringenden Kräfte sehr genau einstellbar sind, da eine exakte Proportionalität zwischen Verformung und Rückstellkraft angenommen werden darf.

Die Schwierigkeit bei der Verwendung eines Formgedächtnismaterials wie beispielsweise Nitinol für ein hierzu verwendendes Bogenelement besteht jedoch darin, den bzw. die Aktivierungsabschnitte auszubilden. Derartige Aktivierungsabschnitt werden - wie vorstehend erläutert - in der Regel in Form von Loops ausgeführt. Bei diesen Loops handelt es sich um Bereiche, in denen das Bogenelement bewusst zwischen benachbarten Übertragungselementen nicht gerade geführt, sondern verlängert ist. Beispielsweise ist das Bogenelement im Bereich des Aktivierungsabschnitts in Form einer Schlaufe oder eines Mäanders geführt. Derartige Aktivierungsabschnitte sind in ein Formgedächtnismaterial nur sehr schwer oder sogar gar nicht einbringbar, da sie - wie vorstehend beschrieben - quasi nicht plastisch verformbar sind. Lediglich eine spezielle, aufwendige Wärmebehandlung bei der Formung der Loops könnte hier Abhilfe schaffen. Um diese Aufwand zu vermeiden, wird das nachstehend beschriebene, erfindungsgemäße Herstellverfahren verwendet.

Die erfindungsgemäße Vorrichtung weiter ausgestaltend weist das Bogenelement eine Mehrzahl von voneinander beabstandeten Formschlusselementen auf, wobei mindestens zwei Formschlusselemente derart miteinander korrespondieren, dass sie in dem eingebauten Zustand der Vorrichtung mit demselben Übertragungselement zusammenwirken. Die Mehrzahl der Formschlusselemente erlaubt zunächst grundsätzlich eine formschlüssige Verbindung des Bogenelements mit einer Mehrzahl von Übertragungselementen. Weiterhin ist es vorteilhaft, mehrere Formschlusselemente des Bogenelements mit ein und demselben Übertragungselement zu koppeln. Dem liegt die Überlegung zugrunde, dass mittels zweier oder mehrerer Formschlusselemente nicht lediglich lineare Kräfte, sondern Kräftepaare, das heißt Drehmomente, von dem Bogenelement auf das jeweilige Übertragungselement übertragen werden können. Hierfür ist es lediglich erforderlich, dass die Formschlusselemente voneinander beabstandet angeordnet sind, sodass zwischen den Formschlusselementen ein Hebelarm vorliegt.

Es versteht sich, dass bei Verwendung mehrerer Formschlusselemente diese vorteilhafterweise hintereinander entlang der Längsachse des Bogenelements angeordnet sind.

Vorzugsweise ist das mindestens eine Formschlusselement, vorzugsweise sämtliche Formschlusselemente, von einer sich - relativ zu der Längsachse des Bogenelements betrachtet - radial erstreckenden Nase gebildet ist, wobei vorzugsweise ein korrespondierendes Übertragungselement einen entsprechenden Kopplungsbereich, insbesondere eine Ausnehmung, aufweist, mit dem bzw. der die Nase formschlüssig eingreifen kann. Ein derartiges Formschlusselement ist besonders gut dazu geeignet, einen Formschluss mit einem jeweils anliegenden Übertragungselement herzustellen. Dabei versteht es sich, dass auch umgekehrt das Bogenelement eine Ausnehmung aufweisen kann, die mit einem entsprechenden Formschlusselement eines Übertragungselements korrespondiert. Eine solche Ausführung führt gleichermaßen zu einem Formschluss und somit zu einer schlupffreien Übertragung von Kräften zwischen dem Übertragungselement und dem Bogenelement. Gleichwohl ist diese Ausführung aufgrund des typischerweise geringen Querschnitts des Bogenelements eher nachteilig, da eine Ausnehmung in dem Bogenelement dessen Querschnitt weiter verringern würde.

Bei einer "Nase" kann es sich insbesondere um ein radial vorstehendes, zylindrisches oder vierkantförmiges Element handeln. Grundsätzlich ist es denkbar, dass die Geometrie des als Nase ausgebildeten Formschlusselements von ihrer Komplexität her über eine zylindrische Form oder eine Vierkantform hinausgeht, beispielsweise durch vorstehende oder abknickende Bereiche, die beispielsweise zum Eingriff mit einem hinterschnittenen Bereich eines Übertragungselements geeignet sein können (siehe Ausführungsbeispiele).

Wie vorstehend bereits beschrieben, ist eine einstückige Ausbildung von Formschlusselement und Bogenelement besonders vorteilhaft. Dies gilt selbstverständlich auch dann, wenn das Formschlusselement von einer Nase im Sinne der vorstehenden Beschreibung gebildet ist.

Grundsätzlich unabhängig davon, ob das Formschlusselement von einer Nase gebildet ist, gleichwohl insbesondere in solchen Fällen in den das Formschlusselement von einer Nase gebildet ist, kann es von besonderem Vorteil sein, wenn sich das Formschlusselement zumindest teilweise in eine Richtung senkrecht zu der jeweils nächstgelegenen Zahnoberfläche erstreckt. Bei einer Zahnspange, die beispielsweise lingual angeordnet ist, das heißt auf der der Zunge zugewandten Seite der Zähne, ist es von Vorteil, wenn sich das jeweilige Formschlusselement des Bogenelements in vestibuläre Richtung, das heißt "nach außen", erstreckt.

Weiterhin ist die erfindungsgemäße Vorrichtung dann von besonderem Vorteil, wenn das Bogenelement mindestens eine lokale Krümmung, vorzugsweise eine Mehrzahl lokaler Krümmungen, aufweist, die jeweils einen Krümmungsradius von maximal 1,0 mm, vorzugsweise von maximal 0,5 mm, weiter vorzugsweise von maximal 0,2 mm, aufweist bzw. aufweisen. Ein derartiges Bogenelement kann besonders gut an die Oberfläche der Zähne angepasst werden, indem es der jeweiligen Oberflächenform eines jeweils anliegenden Zahns folgt. Dies ist insoweit besonders vorteilhaft, als das jeweilige Bogenelement, das mit derartigen Krümmungen versehen an die jeweiligen Zähne angepasst ist, den jeweiligen Patienten im Mund nur geringfügig stört, da er das Bogenelement nicht in demselben Maße als Fremdkörper wahrnimmt, wie dies der Fall wäre, wenn das Bogenelement sich in einigem Abstand zu den jeweils anliegenden Zahnoberflächen befände.

Die Anpassung eines Bogenelements an die Zahnoberflächen hat weiterhin den Vorteil, dass die auf das Bogenelement wirkenden Kräfte, beispielsweise im Zuge des Kauens des Patienten, sehr viel geringer sind als bei solchen Bogenelementen, die sich in einigem Abstand zu den Zähnen erstrecken. Dies ist dadurch zu erklären, dass ein an die Zahnoberflächen möglichst gut angepasstes Bogenelement eine deutlich geringere Angriffsfläche bietet als heute übliche Bogenelemente. Dies hat wiederum den Vorteil, dass das Risiko eines nicht beabsichtigten Abreißens des Bogenelements der erfindungsgemäßen Vorrichtung geringer ist als bei solchen im Stand der Technik. Weiterhin ist die Befestigung der Übertragungselemente an den jeweils anliegenden Zahnoberflächen einfacher zu bewerkstelligen, da die zwischen Übertragungselement und Zahn zu übertragenden, kurzzeitig wirkenden Spitzenbelastungen aufgrund der geringeren Angriffsfläche des zugehörigen Bogenelements verringert sind. Dies erlaubt beispielsweise auch, dass Befestigungsflächen, die zur Befestigung eines Übertragungselements an einem jeweiligen Zahn erforderlich sind, im Vergleich zum Stand der Technik kleiner ausfallen können, ohne das Risiko einer unerwünschten Ablösung der Vorrichtung von den Zähnen zu erhöhen.

Im Hinblick auf eine vorteilhafte Ausgestaltung des mindestens einen Aktivierungsabschnitts des Bogenelements kann es besonders von Vorteil sein, wenn selbiger in Form einer Schlaufe oder eines Mäanders ausgeführt ist. Insbesondere kann die Schlaufe omegaförmig ausgebildet sein. Eine Mäanderform eines Aktivierungsabschnitts kann beispielsweise aus einer Mehrzahl hintereinander, und jeweils alternierend umgedrehter omegaförmiger Teilabschnitte gebildet sein. Ebenso ist es denkbar, dass ein mäanderförmiger Aktivierungsabschnitt in Form eines Zick-Zacks ausgebildet ist. Weitere beispielhafte Ausgestaltungen können den nachstehenden Ausführungsbeispielen entnommen werden.

Die Ausgestaltung eines Aktivierungsabschnitts in der vorstehend bezeichneten Form ermöglicht es, selbigen in Form einer Feder zu verwenden. Die Führung des Bogenelements im Bereich des jeweiligen Aktivierungsabschnitts in Form einer Schlaufe oder in einer sonstigen geometrischen Form führt nämlich dazu, dass das Bogenelement in diesem Bereich eine künstliche Verlängerung aufweist. Dies führt dazu, dass das Bogenelement unter Verwendung des in dem Aktivierungsabschnitt vorgehaltenen "Längenreservoirs" aufgedehnt und/oder gestaucht werden kann. Insoweit erfüllt der Aktivierungsabschnitt in gewisser Weise die Funktion einer Feder, deren Auslenkung zu einer Rückstellkraft in Form einer Zugkraft und deren Stauchung zu einer Rückstellkraft in Form einer Druckkraft führt. Daraus ergibt sich, dass mittels einer entsprechenden Verformung eines jeweiligen Aktivierungsabschnitts des Bogenelements eine gewünschte Kraftkomponente in das Bogenelement einbringbar ist, die sodann aufgrund der kraftübertragenden Kopplung mit einem bzw. mehreren Übertragungselementen auf die jeweils zu behandelnden Zähne wirken kann.

Ausgehend von dem Herstellverfahren der eingangs beschriebenen Art wird die zugrunde liegende Aufgabe erfindungsgemäß durch den folgenden Verfahrensschritt gelöst:
e) Das Bogenelement wird aus einem von einem Blech gebildeten Materialteil herausgearbeitet, wobei eine Dicke des Blechs dessen übrigen Abmessungen deutlich unterschreitet.

Das Verfahren ist insbesondere insoweit vorteilhaft, als ohne weiteren Eingriff einer Maschine oder eines Menschen das jeweilige Bogenelement unmittelbar infolge des Herstellungsprozesses seine schlussendliche Form aufweist. Die Formung des Bogenelements erfolgt dabei ohne den Einfluss von Biegekräften. Dies führt vor allem dazu, dass das fertige Bogenelement gemäß dem erfindungsgemäßen Verfahren frei von Eigenspannungen ist, die in jedem Fall bei einem herkömmlichen Biegeverfahren in das jeweilige Bogenelement eingebracht werden. Das erfindungsgemäße Bogenelement ist hingegen im Moment des Einsetzens in die zugehörigen Übertragungselemente frei von inneren Spannungen. Dies ist insoweit von Vorteil, als die Freiheit von Eigenspannungen eine präzisere Aussage darüber erlaubt, welche Rückstellkräfte in dem Bogenelement infolge einer geplanten Auslenkung aktiviert werden.

Weiterhin ist das Herausarbeiten des Bogenelements aus einem Blech insoweit vorteilhaft, als dieser Verfahrensschritt sowohl besonders einfach und kostengünstig als auch hochpräzise ausgeführt werden kann. Ein Blech ist im Sinne der vorliegenden Anmeldung dadurch gekennzeichnet, dass dessen Dicke deutlich geringer ist als dessen übrige Abmessungen, das heißt als dessen Länge und dessen Breite. Für Bogenelemente für kieferorthopädische Vorrichtungen kommen dabei insbesondere solche Bleche infrage, die eine Dicke von weniger als 1,0 mm, insbesondere von weniger als 0,6 mm, aufweisen. Bei Verwendung eines solchen Materialteils kann das jeweilige Bogenelement besonders einfach mittels Laserschneidens oder mittels Drahterosion aus dem Blech herausgearbeitet werden.

Weiterhin können für ein subtraktives Verfahren im Sinne des "Herausarbeitens" insbesondere Fräsen und Schneiden von Interesse sein. Somit ist es beispielsweise denkbar, ein Bogenelement aus einem Blech auszufräsen, sodass nach Beendigung des jeweiligen Fräsvorgangs das Bogenelement seine schlussendliche Form aufweist. Ein solcher Vorgang kann insbesondere computergesteuert und somit hochpräzise erfolgen.

Gegenüber der automatisierten Herstellung gemäß dem Stand der Technik, der ein Bogenelement mittels eines Biegeroboters automatisch biegt, ist ein subtraktives Verfahren, das vorliegend vorgeschlagen wird, deutlich genauer und präziser, sodass das fertige Bogenelement im Ergebnis mit sehr hoher Genauigkeit der ursprünglich virtuell entworfenen Form entspricht. Eine hohe Genauigkeit bei der Herstellung eines Bogenelements ist schon alleine deswegen mittels eines Biegevorgangs nicht erreichbar, da eine präzise Bestimmung eines plastischen Verformungsanteils relativ zu einem elastischen Verformungsanteil nicht zu 100 % möglich ist, sondern in jedem Fall von den individuellen Materialeigenschaften des jeweiligen Exemplars abhängt.

Diese Art der Herstellung erlaubt auch die genaue Anpassung der lokalen Form des jeweiligen Bogenelements an die jeweils anliegenden Zähne. Weiterhin ist die Produktionsgeschwindigkeit gegenüber einem Biegeverfahren deutlich erhöht, wodurch Kosten gesenkt werden können.

Auch ist das Verfahren gegenüber einer Urformung bevorteilt, beispielsweise einem 3D Druck. Letzterer ist nicht nur vergleichsweise zeitaufwendig, sondern auch relativ kostenintensiv. Weiterhin ist die Präzision zumindest aktueller 3D-Drucker hinsichtlich der extrem geringen Krümmungsradien eines Bogenelements entlang von dessen Längsachse im Vergleich zu einem Schneid- oder Fräsverfahren nicht konkurrenzfähig.

Das erfindungsgemäße Herstellverfahren erlaubt es insbesondere, ein Bogenelement von einem Formgedächtnismaterial zu bilden, beispielsweise von einer Nickel-Titan-Legierung, insbesondere Nitinol. Die Verwendung eines solchen Materials ist unter Verwendung eines Biegeprozesses zur Herstellung eines Bogenelements kaum möglich, da sich diese Materialien kaum oder sogar gar nicht biegen lassen. Dies hängt damit zusammen, dass der elastische Bereich eines Formgedächtnismaterials besonders ausgeprägt ist, sodass das Aufbringen plastischer und somit dauerhafter Verformungen nur schwerlich gelingt. Insbesondere wäre es dafür notwendig, das zu bearbeitende Stück auf eine erhebliche Bearbeitungstemperatur zu erwärmen, um gewissermaßen einen thermischen Umformprozess in Gang zu setzen, der unabhängig von den elastischen Eigenschaften des jeweiligen Materials erfolgt. Bei der Verwendung eines subtraktiven Verfahrens muss hingegen keine Umformung des jeweiligen Materialstücks erfolgen, sodass die superelastischen Eigenschaften eines Formgedächtnismaterials hier nicht hindernd im Weg stehen.

Die Verwendung eines Formgedächtnismaterials für ein Bogenelement ist dabei besonders vorteilhaft, da es aufgrund der nicht eintretenden plastischen Verformung im Zuge seiner Auslenkung besonders gut geeignet ist, die in dem Bogenelement gespeicherten Rückstellkräfte präzise zu bestimmen. Weiterhin ist die Verwendung von Nickel-Titan-Legierungen besonders vorteilhaft, da sie eine hohe biologische Verträglichkeit aufweisen.

Unter Verwendung der erfindungsgemäßen Vorrichtung kann ein Behandlungsverfahren für einen Patienten mit einer Zahnfehlstellung besonders effizient durchgeführt werden. Hierzu wird das folgende Behandlungsverfahren vorgeschlagen:

Behandlungsverfahren zur Korrektur von Zahnfehlstellungen, umfassend die folgenden Verfahrensschritte:
i) Mittels einer Scanvorrichtung wird die Stellung einer Mehrzahl von Zähnen des Unterkiefers und/oder des Oberkiefers eines Patienten erfasst.
ii) Die mittels der Scanvorrichtung erfassten Daten werden in ein digitales Modell überführt, das die gescannten Zähne in ihrer Startstellung, in der sie gescannt wurden, virtuell nachbildet.
iii) Ausgehend von der Startstellung werden die Stellungen der einzelnen Zähne in dem digitalen Modell virtuell verändert, sodass sich eine Zielstellung der Zähne ergibt, in der sich die Zähne nach Abschluss des Behandlungsverfahrens befinden sollen.
iv) Die Differenz der Stellungen der einzelnen Zähne zwischen der Startstellung und der Zielstellung wird in eine Mehrzahl einzelner Bewegungsinkremente zerlegt, sodass sich durch sequenzielles Abschreiten der einzelnen Bewegungsinkremente ausgehend von der Startstellung der Zähne deren Zielstellung ergibt.
v) Zumindest für jeden zu behandelnden Zahn wird ein geeignetes Bracket ermittelt.
vi) Die Brackets werden entsprechend ihrer Zuordnung an den Zähnen des Patienten angeordnet.
vii) Für jedes der einzelnen Bewegungsinkremente wird ein zugehöriges Bogenelement einer Vorrichtung zur Korrektur von Zahnfehlstellungen virtuell entworfen.
viii) Die virtuell entworfenen Bogenelemente werden jeweils mittels eines additiven oder subtraktiven Verfahrens computergesteuert in einem Stück hergestellt, sodass sie nach ihrer Fertigstellung zumindest im Wesentlichen jeweils ihre individuelle, schlussendliche Form aufweisen.
ix) Die einzelnen Bogenelemente werden über die Gesamtdauer des Behandlungsverfahrens hinweg nacheinander mit den auf den Zähnen befindlichen Brackets gekoppelt, wobei nach Abschluss einer einem jeweiligen Bewegungsinkrement entsprechenden realen Veränderung der Stellung der zu behandelnden Zähne das jeweils aktuell eingesetzte Bogenelement entfernt und sodann das Bogenelement für das jeweils anschließende Bewegungsinkrement eingesetzt werden.

Diese Behandlungsmethode hat den besonderen Vorteil, dass die Bewegung der Zähne in einzelnen Schritten vorgenommen werden kann, wobei für jeden der einzelnen Schritte (oder auch "Steps") ein individuelles Bogenelement gefertigt wird. Die Bogenelemente werden sodann in Abhängigkeit des fortschreitenden Behandlungsverfahrens nacheinander eingesetzt. Insoweit handelt es sich bei dem Behandlungsverfahren um ein sequenzielles Verfahren.

Das Behandlungsverfahren hat den besonderen Vorteil, dass die Übertragungselemente, die mit den Zähnen verbunden werden, über die Dauer des gesamten Behandlungsverfahrens typischerweise nicht gewechselt werden müssen. Stattdessen sind ausschließlich die verschiedenen Bogenelemente dafür verantwortlich, dass die zu bewegenden Zähne nach und nach die jeweils gewünschte Bewegung vollführen. Die Übertragungselemente sollten zwar vorteilhafterweise im Vorfeld des Behandlungsverfahrens individuell auf die gewünschte Bewegung eines jeweiligen Zahns angepasst werden, müssen jedoch dann über die Dauer des Behandlungsverfahrens nicht gewechselt werden.

Weiterhin ist das Verfahren insbesondere gegenüber einer sogenannten "Schienentherapie" (beispielsweise "invisalign"®) vorteilhaft, da die in einer solchen Therapie verwendeten Schienen nicht für alle Arten von Zahnbewegungen gleichermaßen geeignet sind. Beispielsweise ist eine Schienentherapie für eine translatorische Bewegung der Zähne entlang des Kieferknochens vergleichsweise ungeeignet. Daher werden Schienentherapien je nach Fall häufig in Kombination mit typischen Zahnspangen verwendet, wobei letztere zunächst die gröbsten Fehlstellungen beheben, bevor mittels Schienen die verbleibenden Feinheiten bearbeitet werden.

Mittels der Verwendung von individualisierten Bogenelementen können hingegen sämtliche Bewegungstypen gut abgebildet werden, sodass das hier vorgeschlagene Behandlungsverfahren zumindest im Wesentlichen unabhängig von der individuellen Ausgangsstellung der Zähne des zu behandelnden Patienten ist und grundsätzlich immer für eine Behandlung infrage kommt.

In einer besonders vorteilhaften Ausgestaltung des Behandlungsverfahrens werden die ausgewählten Brackets vor ihrem Aufsetzen auf die jeweiligen Zähne auf einem Bracketträger angeordnet, wobei die Brackets mittels des Bracketträgers in einer zuvor virtuell geplanten Position auf den Zähnen positioniert und nach ihrer Positionierung mit den Zähnen in Kraft übertragender Weise verbunden werden. Mit anderen Worten werden die Brackets vor ihrem Aufsetzen auf die jeweils zu behandelnden Zähne auf einem Bracketträger angeordnet. Mittels eines solchen Bracketträgers ist es möglich, die Brackets im Vorfeld ihres Einbaus präzise zu platzieren und sodann mittels des Bracketträgers die einzelnen Brackets an die exakte Position auf den zu behandelnden Zähne zu setzen.

Hierzu ist es beispielsweise denkbar, dass der Bracketträger in einer nachgebildeten Negativform der zu behandelnden Zähne ausgebildet ist, in etwa vergleichbar zu einer Schiene, die bei einer Schienentherapie zum Einsatz kommt. Auf einem solchen Bracketträger sind sodann entsprechend der virtuell geplanten Position die einzelnen Brackets angeordnet. Der Bracketträger wird sodann über die jeweils zu behandelnden Zähne gestülpt, wobei er sich aufgrund seiner angepassten Ausformung in eine exakte Position auf die zu behandelnden Zähne setzt. Die auf dem Bracketträger befindlichen Brackets befinden sich folglich gleichermaßen in ihrer exakten Position, nämlich genau der zuvor virtuell entworfenen Position. Die einzelnen Brackets müssen dann nun nur noch in Kraft übertragender Weise mit den Zähnen verbunden werden. Dies kann beispielsweise durch das Einspritzen eines Kunststoffs in einen Zwischenbereich zwischen das jeweilige Bracket und die jeweilige Zahnoberfläche erfolgen. Im Ergebnis sitzen die Brackets mit einer sehr hohen Genauigkeit auf den zuvor virtuell geplanten Positionen der zu behandelnden Zähne.

Ein vorstehend beschriebener Bracketträger kann beispielsweise besonders einfach dadurch hergestellt werden, dass er aus einer Kunststofffolie tiefgezogen wird. Die Form des Stempels, der für den Tiefziehvorgang verwendet wird, kann beispielsweise mittels eines Intraoralscans und anschließender Ausformung eines entsprechenden Positivs in Gips erfolgen und ist somit genau an die zu behandelnden Zähne angepasst.

Die einzelnen Bogenelemente, die für die einzelnen Bewegungsinkremente vorgesehen sind, werden vorteilhafterweise in der vorstehend beschriebenen Weise aus einem Materialteil herausgearbeitet. Die sich hierdurch ergebenden Vorteile sind vorstehend im Zusammenhang mit dem erfindungsgemäßen Herstellverfahren bereits beschrieben. Vorteilhafterweise werden die Bogenelemente von einem Formgedächtnismaterial, insbesondere von Nitinol, gebildet.

Das Behandlungsverfahren ist weiterhin dann vorteilhaft, wenn die einzelnen Bogenelemente, die nacheinander in Verbindung mit den einzelnen Bewegungsinkrementen zum Einsatz kommen, jeweils einen identischen Querschnitt aufweisen. Dies ist insofern von Vorteil, als die verwendeten Brackets im Vorhinein der Behandlung lediglich auf eine Form zu verwendender Bogenelemente angepasst werden muss. Insbesondere muss der Bracketslot der jeweiligen Brackets lediglich für eine Form von Bogenelementen passend ausgeformt sein.

### Ausführungsbeispiele

Die erfindungsgemäße Vorrichtung wird anhand von Ausführungsbeispielen, die in den Figuren dargestellt sind, näher erläutert. Es zeigen:
- Fig. 1:: Einen Oberkiefer mit einer schematisch dargestellten Vorrichtung zur Behandlung von Zahnfehlstellungen,
- Fig. 2:: Verschiedene Arten von Formschlusselementen für ein Bogenelement einer Vorrichtung gemäß Figur 1,
- Fig. 3:: Ein Detail eines Eingriffs eines Formschlusselements mit einem Kopplungsbereich eines Übertragungselements,
- Fig. 4:: Einen Oberkiefer gemäß Figur 1, wobei die verwendete erfindungsgemäße Vorrichtung mit einer Mehrzahl von Aktivierungsabschnitten versehen ist,
- Fig. 5:: Einen Unterkiefer mit einer Mehrzahl von Zähnen, die mit einer erfindungsgemäßen Vorrichtung zusammenwirken,
- Fig. 6:: Der Unterkiefer gemäß Figur 6, jedoch in einem fortgeschrittenen Stadium eines Behandlungsverfahrens zur Korrektur von Zahnfehlstellungen,
- Fig. 7:: Der Unterkiefer gemäß Figur 6 unmittelbar vor Abschluss des Behandlungsverfahrens,
- Fig. 8:: Verschiedene Arten von Aktivierungsabschnitten eines Bogenelements einer erfindungsgemäßen Vorrichtung und
- Fig. 9:: Eine virtuelle Darstellung eines Unterkiefers, der eine Mehrzahl von Zähnen aufweist, die mit einer erfindungsgemäßen Vorrichtung zusammenwirken.

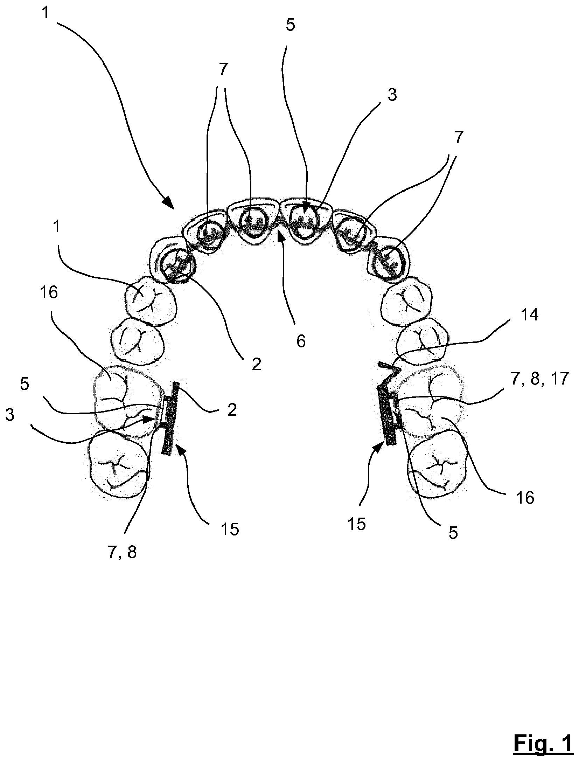

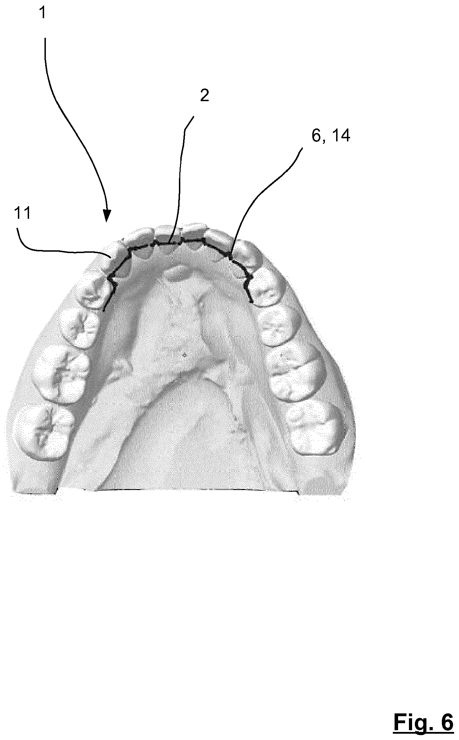

Beispielhafte erfindungsgemäße Vorrichtungen **1,** die in den **Figuren 1****,** **4****,** **5** **bis 7 und 9** dargestellt sind, umfassen jeweils ein Bogenelement **2** sowie eine Mehrzahl von Übertragungselementen **3.** Die Übertragungselemente **3** dienen der Übertragung von Kräften zwischen den jeweils anliegenden Zähnen **11** und dem Bogenelement **2.** Übertragungselemente **3** werden in der Technik häufig auch als Brackets bezeichnet. Das Bogenelement **2** weist hier einen quadratischen Querschnitt von 0,5 mm x 0,5 mm auf. Das Bogenelement **2** ist eben ausgeführt, indem es mittels Laserschneiden aus einem Blech herausgeschnitten wurde. Die ebene Ausführung schlägt sich darin nieder, dass eine Längsachse **19** des Bogenelements **2** in einem kraftfreien Zustand des Bogenelements **2,** in dem er frei von Zwangskräften und dergleichen ist, einer Ebene verläuft.

Die Übertragungselemente **3** sind in Kraft übertragender Weise mit den jeweils anliegenden Zähnen **11** verbunden. Diese Verbindung erfolgt derart, dass eine Relativbewegung zwischen den Übertragungselementen **3** und den zugehörigen Zähnen **11** nicht möglich ist. Wenn überhaupt findet eine solche Relativbewegung lediglich im Umfang einer Materialdehnung des Übertragungselements **3** bzw. eines Verbundstoffes wischen Übertragungselement **3** und den jeweiligen Zahn **11** statt.

Das Bogenelement **2** und die Übertragungselemente **3** sind jeweils mittels Formschlusselementen **7** miteinander verbunden. Diese Formschlusselemente **7** wirken derart, dass sie formschlüssig mit einem jeweiligen Kopplungsbereich **5** eines jeweiligen Übertragungselements **3** eingreifen. Dieser Formschluss zwischen dem Bogenelement **2** und dem jeweiligen Übertragungselement **3** bewirkt, dass zwischen dem Bogenelement **2** und dem Übertragungselement **3** Kräfte leitbar sind, ohne dass es dabei zu einer Relativbewegung zwischen dem Bogenelement **2** und dem jeweiligen Übertragungselement **3** kommt. Mit anderen Worten erfolgt die Verbindung zwischen dem Bogenelement **2** und den Übertragungselementen **3** schlupffrei. Auf diese Weise ist die Kraft, die von dem Bogenelement **2** auf die Übertragungselemente **3** ausgeübt wird, besonders präzise bestimmbar, da ein versehentlicher Kraftverlust infolge eines Schlupfes bzw. Durchrutschens zwischen dem Bogenelement **2** und den Übertragungselementen **3** nicht stattfindet.

Die Darstellung gemäß **Figur 1** zeigt die erfindungsgemäße Vorrichtung **1** lediglich schematisch. Das Bogenelement **2** der Vorrichtung **1** ist mittels Verankerungen **15** an den hinteren Backenszähnen **16** verankert. Hierzu sind die hinteren Backenszähne **16** ebenso wie die vorderen Zähne **11** jeweils mit Übertragungselementen **3** verbunden. Ferner weisen die Übertragungselemente **3** jeweils einen Kopplungsbereich **5** auf, der mit einem Formschlusselement **7** des Bogenelements **2** formschlüssig eingreift. Die Formschlusselemente **7,** die mit den hinteren Backenzähnen **16** mittelbar verbunden sind, sind gemäß der Darstellungsweise von **Figur 1** nicht mit dem übrigen Bogenelement **2** verbunden. Diese Darstellung ist insoweit rein schematisch zu sehen und stellt nicht die realen Gegebenheiten dar; das Bogenelement **2** ist bis zu den Backenzähnen **16** geführt. Weiterhin sind sowohl die Übertragungselemente **3** als auch die Formschlusselemente **7** an den Backenzähnen **16** in **Figur 1** überhöht dargestellt, um deren Ausgestaltung beispielhaft deutlich zu machen.

Hierdurch ist beispielsweise erkennbar, dass die Formschlusselemente **7** gemäß **Figur 1** an den Backenzähnen **16** jeweils unterschiedlich ausgebildet sind. Somit verfügt das Formschlusselement **7** des in **Figur 1** linken Backenzahns **16** lediglich über radial vorstehende Nasen **8,** die den Kopplungsbereich **5** des zugehörigen Übertragungselements **3** formschlüssig einfassen. Am Beispiel des gegenüberliegenden Formschlusselements **7** des rechten Backenzahns **16** ist ersteres mit Nasen **8** versehen, die einen distalen Umgreifungsbereich **17** aufweisen. Mittels dieses Umgreifungsbereichs **17** umgreifen die Nasen **8** des Formschlusselements **7** einen korrespondierenden, hinterschnittenen Kopplungsbereich **5** des zugehörigen Übertragungselements **3** und stellen auf diese Weise den gewünschten Formschluss sicher.

An den vorderen Zähnen des Oberkiefers gemäß **Figur 1** ist das Bogenelement **2** jeweils mittels vorstehender Nasen **8** an den zugehörigen Übertragungselementen **3** befestigt. Hierbei wird jedes der Übertragungselemente **3** mit zwei Formschlusselementen **7** zusammen, was insoweit vorteilhaft ist, als eine Übertragung von Drehmomenten zwischen dem Bogenelement **2** und den Übertragungselementen **3** möglich ist. Bei der Verwendung lediglich eines Formschlusselements **7** wäre eine solche Übertragung nur dann möglich, wenn das Formschlusselement **7** derart ausgeformt wäre, sodass eine relative Verdrehung des Bogenelements **2** zu dem zugehörigen Übertragungselement **3** blockiert ist.

Die Ausbildung von Formschlusselementen **7** an dem Bogenelement **2** ist gemäß dem Stand der Technik besonders schwierig, da die exakte Positionierung der Formschlusselemente **7** kaum möglich ist. Dies ist dadurch zu begründen, dass die individuelle Position des Bogenelements **2** im Vorfeld der Verbindung desselben mit den Übertragungselementen **3** bisher nicht ermittelbar war und somit erst im Moment des Einbaus tatsächlich feststand. Mit anderen Worten war es nicht möglich, die Formschlusselemente **7** im Vorhinein korrekt zu platzieren, um sodann die gewünschte Kraft auf die Übertragungselemente **3** bzw. die anliegenden Zähne **11** auszuüben. Eine derart exakte Planung der Geometrie des Bogenelements **2** sowie der Positionen der Übertragungselemente **3** und die daraus resultierende Möglichkeit der Vorausplanung der Positionen der Formschlusselemente **7** sowie der korrespondierenden Kopplungsbereich **5** ist erst durch das hier vorgeschlagene erfindungsgemäße Herstellverfahren ermöglicht. Dadurch ist sichergestellt, dass nach dem Verbinden des Bogenelements **2** mit den Übertragungselementen **3** die Auslenkung des Bogenelements **2** und die daraus resultierenden Rückstellkräfte innerhalb des Bogenelements **2** genau die Größe bzw. Größen aufweisen, die zuvor in Abhängigkeit der diagnostizierten Zahnfehlstellungen geplant wurden. Daher ist es mittels der erfindungsgemäßen Vorrichtung **1** nunmehr möglich, die auf die Zähne **11** wirkenden Kräfte exakt zu planen und zu dem mit hoher Genauigkeit eine Aussage darüber treffen zu können, dass diese geplanten Kräfte auch tatsächlich wirken.

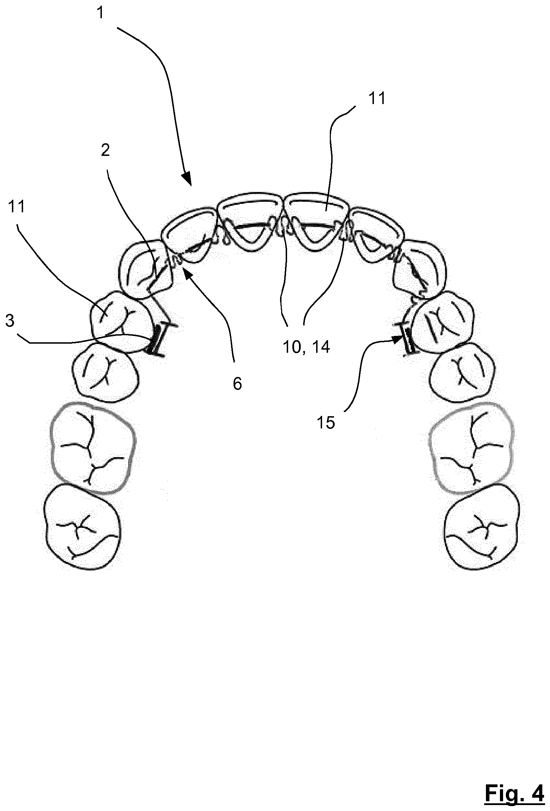

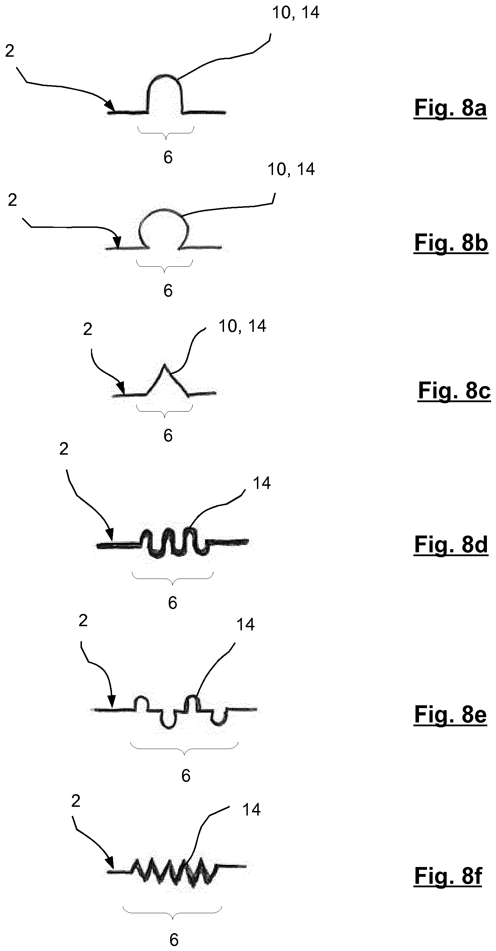

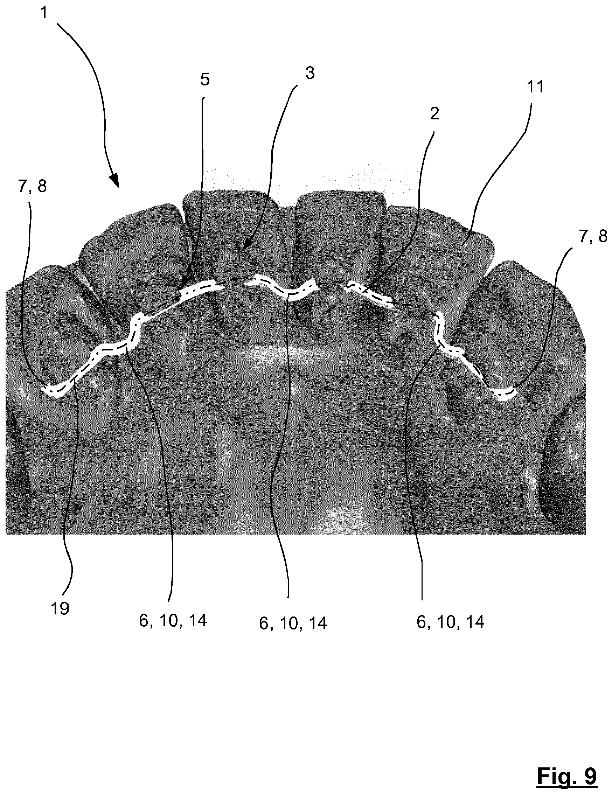

Für die Aktivierung des Bogenelements **2** sind die Aktivierungsabschnitte **6** vorgesehen. Diese sind in **Figur 1** lediglich schematisch dargestellt, können jedoch anhand von **Figur 4** sowie **Figur 9** genauer betrachtet werden. Weiterhin bietet **Figur 8** eine beispielhafte Auswahl verschiedener Ausgestaltungen von Aktivierungsabschnitten **6.**

Die Aktivierungsabschnitte **6** werden jeweils zwischen solchen Übertragungselementen **3** bzw. Zähnen **11** vorgesehen, die infolge einer kieferorthopädischen Behandlung mittels der erfindungsgemäßen Vorrichtung **1** in dem zugehörigen Kieferknochen bewegt werden sollen. In **Figur 1** sind die Aktivierungsabschnitte **6** schematisch mittels einer spitzen Geometrie dargestellt. Dies ist insbesondere an dem Formschlusselement **7** des rechten Backenzahns **16** zu sehen.

Die Aktivierungsabschnitte **6** ermöglichen es, dass das Bogenelement **2** um nennenswerte Beträge ausgelenkt werden kann. Das heißt, dass das Bogenelement **2** durch Wirkung der Aktivierungsabschnitte **6** sowohl lokal gestaucht als auch lokal gedehnt werden kann, wodurch aufgrund der elastischen Eigenschaften des Materials des Bogenelements **2** (vorzugsweise ist es von einem Formgedächtnismaterial, insbesondere von Nitinol gebildet) in dem Bogenelement **2** Rückstellkräfte aktivierbar sind, die sodann auf die angrenzenden Übertragungselemente **3** wirken. Hierbei versteht es sich, dass diese Rückstellkräfte aufgrund der festen Verbindung des Bogenelements **2** mit den Übertragungselementen **3** lediglich auf die benachbarten Übertragungselemente **3** wirken. Eine übergreifende Wirkung eines Aktivierungsabschnitts **6,** das heißt eine Krafteinwirkung eines Aktivierungsabschnitts **6** auf den übernächsten Zahn **11,** findet nur insoweit statt, als der jeweils angrenzende Zahn **11** sich aufgrund der wirkenden Rückstellkräfte des Bogenelements **2** bewegt und insoweit zu einer Aktivierung des jeweils nächsten Aktivierungsabschnitts **6** führt (Dehnung oder Stauchung). Die Aktivierungsabschnitte **6** können dabei unterschiedlich gestaltet sein, wie sich insbesondere aus **Figur 8** ergibt. Die so geformten Geometrien werden auch als "Loops" bezeichnet.

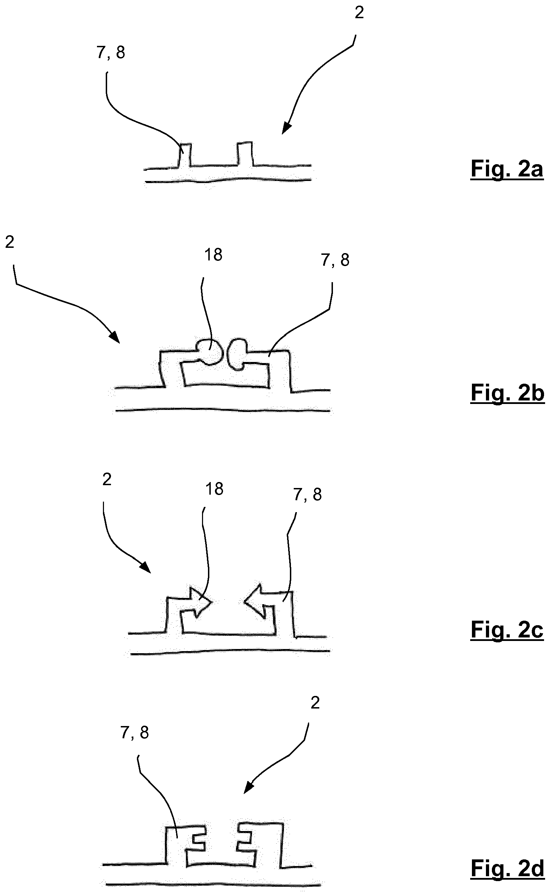

Die Formschlusselemente **7** können unterschiedlich ausgestaltet werden. Eine beispielhafte Übersicht ist **Figur 2** in den Varianten a bis d entnehmbar. Hierbei kann grundsätzlich zwischen solchen Formschlusselementen **7** unterschieden werden, die einen korrespondierenden Kopplungsbereich **5** eines Übertragungselements **3** lediglich seitlich einfassen **(****Figur 2a****)** oder besagten Kopplungsbereich **5** zudem hintergreifen (**Figuren 2b bis 2d****)**. Ferner können die Formschlusselemente **7** mit Widerhaken **18** ausgebildet sein, die eine Bewegung des Bogenelements **2** in beide Richtungen parallel zu einer Längsachse **19** des Bogenelements **2** zusätzlich blockieren.

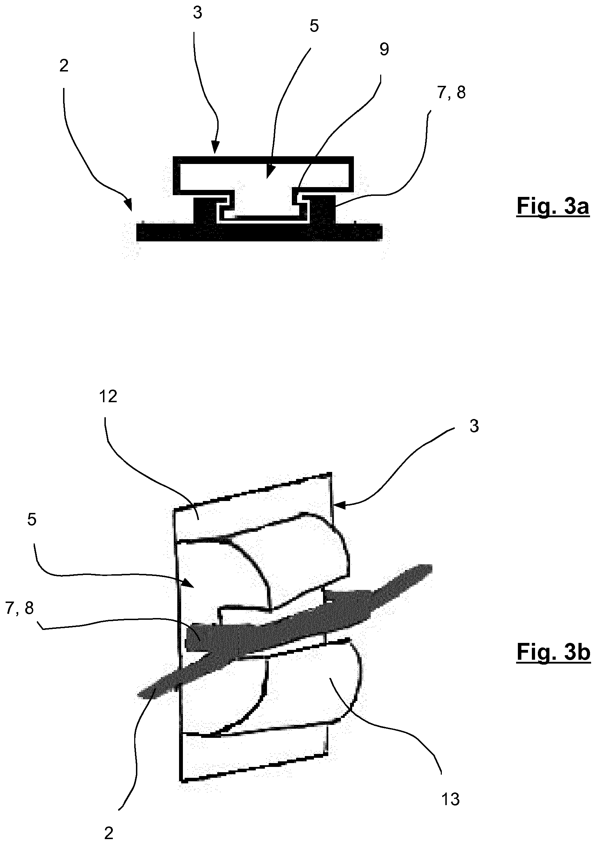

Eine beispielhafte Darstellung eines Zusammenwirkens eines Bogenelements **2** mit einem Übertragungselement **3** ist **Figur 3** entnehmbar. Hier ist insbesondere erkennbar, wie ein als Nase **8** ausgebildetes Formschlusselemente **7** mit einem korrespondierend aus geformten Kopplungsbereich **5** eines Übertragungselements **3** eingreift. Das Übertragungselement **3** ist hier, wie in Teil b von **Figur 3** erkennbar, als Bracket ausgebildet, dessen Kopplungsbereich **5** von einem Bracketslot gebildet ist. Dieser Bracketslot erstreckt sich längs über eine Breite des Brackets in Form einer Nut, wobei das Bogenelement **2** in diese Nut des Bracketslots eingelegt ist. Die Formschlusselemente **7** fassen den Bracketslot seitlich ein, sodass eine Relativbewegung zwischen dem Bogenelement **2** und dem Übertragungselement **3** in längsachsparallele Richtung des Bogenelements **2** blockiert ist.

Es versteht sich, dass eine Verankerung des Bogenelements **2** an verschiedenen Zähnen **11** möglich ist. Ist es nicht zwingend erforderlich, dass hierfür Backenzähne **16** verwendet werden. Die grundsätzliche Verwendung der erfindungsgemäßen Vorrichtung **1** richtet sich nach den allgemeinen anerkannten Regeln der Technik in der Kieferorthopädie. Dies betrifft sowohl die Art und Weise der Bewegung der einzelnen Zähne **11** als auch die Ausgestaltung der Übertragungselemente **3** die Dimensionierung des Querschnitts des Bogenelements **2.** Letzteres betrifft auch das Zusammenspiel der Aktivierungsabschnitte **6** mit den Übertragungselementen **3** in Bezug auf die gewünschten Bewegungen der jeweils zu behandelnden Zähne.

Am Beispiel gemäß **Figur 4** ist erkennbar, dass die Aktivierungsabschnitte **6** mäanderförmig ausgebildet sind. Die Mäanderform eines jeweiligen Aktivierungsabschnitts **6** ist in der Form mehrerer, benachbarter Schlaufen ausgebildet, wobei die Schlaufen jeweils ihre Hochpunkte alternierend oben und unten aufweisen. Die Ausgestaltung der Aktivierungsabschnitte **6** ist unabhängig von deren konkreter Geometrie stets so zu wählen, dass sie als Federelement wirken können, sodass das Bogenelement **2** mit einer Rückstellkraft (Zugkraft, Druckkraft, Torsionsmoment, Biegemoment) beaufschlagt werden kann. Anhand von **Figur 8** sind verschiedene geometrische Formen für Aktivierungsabschnitte 6 erkennbar. Beispielsweise ist ein Aktivierungsabschnitt in Form eines U-förmigen Loops **14** denkbar **(****Figur 8a****).** Ebenso die in **Figur 8b** gezeigte Omegaform möglich. Auch ist eine spitz zulaufende Pyramidenform denkbar (**Figur 8c****).** Hinsichtlich einer mäanderförmigen Ausgestaltung der Aktivierungsabschnitte wird beispielhaft auf die **Figuren 8d bis 8f** verwiesen.

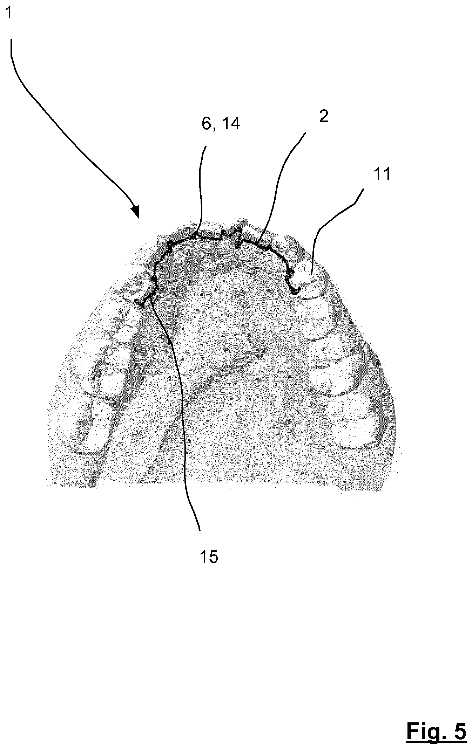

Eine kieferorthopädische Behandlung mittels einer erfindungsgemäßen Vorrichtung **1** ist besonders vorteilhaft. Ein beispielhafter Behandlungsverlauf ist anhand der **Figuren 5 bis 7** erkennbar. Hier kommt eine kieferorthopädische Vorrichtung **1** zum Einsatz, die eine Fehlstellung der vorderen Schneidezähne des Unterkiefers beheben soll. Die Vorrichtung **1** ist sowohl links als auch rechts an den jeweils von der Mitte aus betrachtet vierten Zähnen des Unterkiefers verankert. Die in den **Figuren 5 bis 7** durchgehend schwarz dargestellten Linien repräsentieren verschiedene Bogenelemente **2,** die mittels nicht dargestellter Übertragungselemente **3** mit den Zähnen **11** verbunden sind. Einzelne Aktivierungsabschnitte **6** sind jeweils in Zahnzwischenräumen zwischen den Zähnen **11** mittels Verdickungen angedeutet. Bezug nehmend auf das Behandlungsverfahren ergibt es sich, dass in Abhängigkeit des Fortschritts des Behandlungsverfahrens jeweils das Bogenelement **2** nach jedem abgeschlossenen Bewegungsinkrement der zu behandelnden Zähne **11** ausgewechselt werden muss. Hierbei können in aller Regel die Übertragungselemente **3,** die an den Zähnen **11** angeordnet sind, über die gesamte Behandlung hinweg beibehalten werden.

Konkret bedeutet dies, dass für die Planung der kieferorthopädische Behandlung zunächst der Status-quo vor Beginn der Behandlung in Bezug auf die Anfangsstellung der zu behandelnden Zähne erfasst werden muss. In Abhängigkeit dieser Anfangsstellung wird anhand eines virtuellen Modells der erfassten Zähne eine gewünschte Endstellung der Zähne erzeugt. Dies geschieht anhand einer virtuellen Bewegung der Zähne ausgehend von einem virtuellen Modell, das sich aus der erfassten Anfangsstellung der zu behandelnden Zähne ergibt. Die Differenz zwischen der Endstellung und der Anfangsstellung der zu behandelnden Zähne entspricht einer Gesamtbewegung.

In aller Regel kann diese Gesamtbewegung nicht ausreichend unter Einsatz einer einzigen, in all ihren Komponenten durchgehend identischen kieferorthopädischen Vorrichtung erreicht werden. Daher wird gemäß des vorgeschlagenen Behandlungsverfahrens die ermittelte Gesamtbewegung in eine Mehrzahl einzelner Bewegungsinkremente zerlegt, die jeweils für sich unter Verwendung einer, in all ihren Bestandteilen identischen kieferorthopädischen Vorrichtung erreicht werden können. Jedes dieser dann festgelegten Bewegungsinkremente wird gemäß dem Behandlungsverfahren mit einem zugehörigen Bogenelement **2** assoziiert. Daraus ergibt sich, dass ein jeweiliges Bogenelement **2** dafür zuständig ist, im Zusammenspiel mit den jeweiligen Übertragungselementen **3** die zu behandelnden Zähne so weit und in diejenige Position zu bewegen, dass das jeweils zugehörige, geplante Bewegungsinkrement beendet wird.

Sobald dieses Bewegungsinkrement beendet ist, wird schließlich das derzeitige Bogenelement **2** entnommen und das jeweils nächste Bogenelement **2** eingesetzt, sodass das nächste Bewegungsinkrement vollzogen werden kann. Das Behandlungsverfahren stellt somit ein sequenzielles Verfahren dar, bei dem nach und nach die einzelnen Bewegungsinkremente zwischen der Anfangsstellung und der Entstellung der zu behandelnden Zähne jeweils durch einzelne, individuelle Bogenelemente **2** ausgeführt werden.

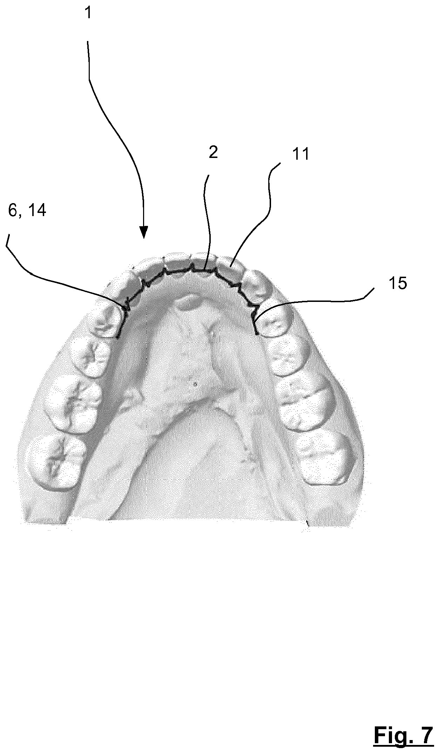

Aus den **Figuren 5 bis 7** ist die unterschiedliche Form der dort gezeigten Bogenelemente **2** erkennbar. Die Darstellung gemäß **Figur 7** zeigt die zu behandelnden Zähne während ihres letzten Bewegungsinkrements, nach dessen Beendigung sich die Zähne in ihrer ursprünglich geplanten und gewünschten Entstellung befinden.

Die Darstellung gemäß **Figur 9** zeigt einen weiteren Unterkiefer im Bereich von dem dritten Zahn links bis zu dem dritten Zahn rechts. Die Darstellung stellt eine virtuelle Abbildung eines zu behandelnden Unterkiefers dar. An jedem der zu behandelnden Zähne **11** ist jeweils eine Übertragungseinrichtung **3** angeordnet. Mit den Übertragungseinrichtungen **3** ist ein Bogenelement **2** gekoppelt, sodass Kräfte zwischen dem Bogenelement **2** und den Übertragungselementen **3** übertragbar sind. Das Bogenelement **2** verfügt dem gezeigten Beispiel über insgesamt drei Aktivierungsabschnitte **6,** die hier jeweils in Form von als Schlaufe **10** geformten Loops **14** gebildet sind. Die Form dieser Loops **14** entspricht in etwa derjenigen gemäß **Figur 8a****.** Das Bogenelement **2** verfügt über eine Längsachse **19,** die sich entlang des Bogenelements **2** erstreckt. Das Bogenelement **2** ist insgesamt eben ausgebildet. Das heißt, dass sich die Längsachse **19** innerhalb einer nicht dargestellten Ebene befindet, die hier in etwa senkrecht zu einer Hochachse der Zähne **11** orientiert ist.

Anhand der Darstellung ergibt sich, dass die zu behandelnden Zähne **11,** die hier in dem virtuellen Modell dargestellt sind, zu weit voneinander entfernt stehen. Das Behandlungsziel bei einer solchen Anfangsstellung der zu behandelnden Zähne **11** besteht folglich darin, die Zähne **11** aufeinander zu zu bewegen. Hierfür ist es erforderlich, dass das geplante Bogenelement **2** nach dessen Einsetzen in die Übertragungselemente **3** mit einer inneren Zugspannung versehen ist, sodass aufgrund der in dem Bogenelement **2** wirkenden Rückstellkraft das Bogenelement **2** bestrebt ist, sich in seine ursprüngliche Form zurück zusammenzuziehen. Im Zuge dieser Bewegung soll das Bogenelement **2** die zu behandelnden Zähne **11** "mitschleppen". Es versteht sich, dass hierfür eine kraftübertragende Kopplung des Bogenelements **2** an den Übertragungselementen **3** erforderlich ist. Diese Kopplung wird hier erfindungsgemäß mittels Formschlusselementen **7** erreicht, von denen in **Figur 9** nur die jeweils äußeren sichtbar sind.

Die Formschlusselemente **7** sind hier von radial vorstehenden Nasen **8** gebildet, die sich in etwa senkrecht zu der Längsachse **19** des Bogenelements **2** erstrecken. Die Nasen **8** sind dazu geeignet, formschlüssig mit den jeweils anliegenden Übertragungselementen **3** einzugreifen. In dem dargestellten Fall drücken die Nasen **8** seitlich gegen entsprechende Anschlagflächen der Kopplungsbereiche **5** der jeweiligen Übertragungselemente **3.** Auf diese Weise wird eine schlupffreie Kraftübertragung zwischen dem Bogenelement **2** und den jeweiligen Übertragungselementen **3** sichergestellt.

Das Bogenelement **2** gemäß **Figur 9** enthält neben den dort sichtbaren Formschlusselementen **7** noch weitere Formschlusselemente **7,** die in Form sich radial erstreckender Nasen **8** ausgebildet sind. Diese sind jedoch in **Figur 9** nicht erkennbar, da sie in korrespondierende Ausnehmungen der jeweils anliegenden Übertragungselemente **3** eingreifen. Hierzu erstrecken sich diese Nasen **8** relativ zu den Zähnen **11** betrachtet in vestibuläre Richtung in eine entsprechende Ausnehmung des jeweiligen Übertragungselements **3** hinein.

Es versteht sich, dass neben einer reinen Bewegung der Zähne entlang des Kieferknochens die Zähne mittels der erfindungsgemäßen Vorrichtung **1** sowohl um deren Hochachse als auch um deren Querachsen betrachtet verdreht werden können, das heißt mittels des Bogenelements **2** Biegemomente auf die Übertragungselemente **3** übertragbar sind. Um dies zu erreichen, wird das jeweilige Bogenelement **2** nicht lediglich in seiner Länge betrachtet ausgelenkt, sondern zu dem womöglich tordiert oder um dessen Längsachse **19** gebogen. In jedem Fall wird durch die Verformung des Bogenelements **2** im Vorfeld der Kopplung desselben mit den Übertragungselementen **3** in dem Bogenelement **2** eine Rückstellkraft (oder eben ein Rückstellmoment) aktiviert, die sich aufgrund der formschlüssigen Kopplung mit den Übertragungselementen **3** sodann in einer gewünschten Bewegung der zu behandelnden Zähne **11** niederschlägt.

Es versteht sich, dass die einzelnen Merkmale der einzelnen Ausführungsbeispiele gemäß der vorstehenden Beschreibung nicht zwingend aufeinander voneinander abhängen, sondern der Fachmann die einzelnen Merkmale auch auf andere Weise miteinander kombinieren kann, sofern ihm dies technisch möglich erscheint.

### Bezugszeichenliste

- 1: Vorrichtung
- 2: Bogenelement
- 3: Übertragungseinrichtung
- 4: Zahnoberfläche
- 5: Kopplungsbereich
- 6: Aktivierungsabschnitt
- 7: Formschlusselement
- 8: Nase
- 9: Ausnehmung
- 10: Schlaufe
- 11: Zahn
- 12: Bracketbasis
- 13: Slot
- 14: Loop
- 15: Verankerung
- 16: Backenzahn
- 17: Umgreifungsbereich
- 18: Widerhaken
- 19: Längsachse

## Patentansprüche

1. Vorrichtung (1) zur Korrektur von Zahnfehlstellungen, umfassend
- ein Bogenelement (2) und
- mindestens zwei Übertragungselemente (3),
wobei jedes der Übertragungselemente (3) dazu geeignet ist, mit einer Zahnoberfläche (4) zusammenzuwirken und einen Kopplungsbereich (5) aufweist, in dem das jeweilige Übertragungselement (3) mit dem Bogenelement (2) in Kraft übertragender Weise koppelbar oder gekoppelt ist,
wobei das Bogenelement (2) global betrachtet eine parabolische, einer Form eines Unterkiefers oder eines Oberkiefers folgende, gekrümmte Form aufweist,
wobei das Bogenelement (2) mindestens einen Aktivierungsabschnitt (6) aufweist, der zwischen zwei benachbarten Übertragungselementen (3) angeordnet und derart ausgeformt ist, dass das Bogenelement (2) in einem eingebauten Zustand der Vorrichtung (1), in dem es mit den Übertragungselementen (3) gekoppelt ist, zumindest lokal elastisch verformt ist, sodass in dem Bogenelement (2) eine Rückstellkraft wirkt, die mittels der Kopplung auf die Übertragungselemente (3) übertragbar ist,
wobei das Bogenelement derart eben ausgeführt ist, dass sich eine Längsachse (19) des Bogenelements (2) - zumindest in einem kraftfreien Zustand des Bogenelements (2) - innerhalb einer Ebene erstreckt,
wobei das Bogenelement (2) mindestens ein Formschlusselement (7) umfasst, mittels dessen das Bogenelement (2) in dem eingebauten Zustand der Vorrichtung (1) formschlüssig mit einem jeweiligen Übertragungselement (3) zusammenwirkt,
**dadurch gekennzeichnet, dass**
eine Relativbewegung des Bogenelements (2) und des jeweiligen Übertragungselements (3) zueinander in - im Kopplungsbereich (5) des Übertragungselements (5) betrachtet - längsachsparallele Richtung des Bogenelements (2) derart blockiert ist, dass ein Schlupf zwischen dem Bogenelement (2) und dem jeweiligen Übertragungselement (3) unterbunden ist.

2. Vorrichtung (1) nach Anspruch 1, **dadurch gekennzeichnet, dass** das Bogenelement (2) einen rechteckigen, vorzugsweise quadratischen, Querschnitt aufweist, wobei Kantenlängen des Bogenelements (2) vorzugsweise maximal 0,6 mm, weiter vorzugsweise maximal 0,5 mm, betragen.

3. Vorrichtung (1) zur Korrektur von Zahnfehlstellungen nach Anspruch 1 oder 2, **dadurch gekennzeichnet, dass** das Bogenelement (2) von einem Formgedächtnismaterial gebildet ist, vorzugsweise von einer Nickel-Titan-Legierung, insbesondere von Nitinol.

4. Vorrichtung (1) nach einem der Ansprüche 1 oder 3, **dadurch gekennzeichnet, dass** wobei das Bogenelement (2) in mindestens einem Aktivierungsabschnitt (6) in Form einer Schlaufe (10) oder mäanderförmig ausgebildet ist, sodass das Bogenelement (2) in dem Aktivierungsabschnitt (6) als Feder wirken kann.

5. Vorrichtung (1) nach einem der Ansprüche 1 oder 4, das Bogenelement (2) eine Mehrzahl von voneinander beabstandeten Formschlusselementen (7) aufweist, wobei mindestens zwei Formschlusselemente (7) derart miteinander korrespondieren, dass sie in dem eingebauten Zustand der Vorrichtung (1) mit demselben Übertragungselement (3) zusammenwirken.

6. Vorrichtung (1) nach einem der Ansprüche 1 bis 5, **dadurch gekennzeichnet, dass** das mindestens eine Formschlusselement (7) von einer sich - relativ zu einer Längsachse des Bogenelements (2) betrachtet - radial erstreckenden Nase (8) gebildet ist, wobei vorzugsweise ein korrespondierendes Übertragungselement (3) eine entsprechende Ausnehmung (9) aufweist, mit der die Nase (8) formschlüssig eingreift.

7. Vorrichtung (1) nach einem der Ansprüche 1 bis 6, **dadurch gekennzeichnet, dass** das Bogenelement (2) mindestens eine lokale Krümmung, vorzugsweise eine Mehrzahl lokaler Krümmungen, aufweist, die einen Krümmungsradius von maximal 1,0 mm, vorzugsweise von maximal 0,5 mm, weiter vorzugsweise von maximal 0,2 mm, aufweist bzw. aufweisen.

8. Vorrichtung (1) nach einem der Ansprüche 1 bis 7, **dadurch gekennzeichnet, dass** das Bogenelement (2) einstückig ausgeführt ist.

9. Verfahren zur Herstellung eines Bogenelements (2) für eine Vorrichtung (1) zur Korrektur von Zahnfehlstellungen nach Anspruch 1, umfassend die folgenden Verfahrensschritte:
a) Die Stellung einer Mehrzahl von Zähnen (11) des Unterkiefers des Oberkiefers eines Patienten wird erfasst.
b) Unter Nutzung der erfassten Stellung der Zähne (11) wird in ein digitales Modell der Zähne (11) erstellt.
c) Unter Zuhilfenahme des digitalen Modells wird ein Bogenelement (2) für die Vorrichtung (1) virtuell entworfen, wobei das Bogenelement (2) global betrachtet eine parabolische, einer Form eines Unterkiefers oder eines Oberkiefers folgende, gekrümmte Form aufweist und mindestens einen Aktivierungsabschnitt (6) aufweist, der zwischen zwei benachbarten Übertragungselementen (3) angeordnet und derart ausgeformt ist, dass das Bogenelement (2) in einem eingebauten Zustand der Vorrichtung (1), in dem es mit den Übertragungselementen (3) gekoppelt ist, zumindest lokal elastisch verformt ist, sodass in dem Bogenelement (2) eine Rückstellkraft wirkt, die mittels der Kopplung auf die Übertragungselemente (3) übertragbar ist, und das Bogenelement derart eben ausgeführt ist, dass sich eine Längsachse (19) des Bogenelements (2) - zumindest in einem kraftfreien Zustand des Bogenelements (2) - innerhalb einer Ebene erstreckt und das Bogenelement (2) mindestens ein Formschlusselement (7) umfasst, mittels dessen das Bogenelement (2) in einem eingebauten Zustand der Vorrichtung formschlüssig mit einem jeweiligen Übertragungselement (3) zusammenwirkt, wobei eine Relativbewegung des Bogenelements (2) und des jeweiligen Übertragungselements (3) zueinander in - im Kopplungsbereich (5) des Übertragungselements (5) betrachtet - längsachsparallele Richtung des Bogenelements (2) derart blockiert ist, dass ein Schlupf zwischen dem Bogenelement (2) und dem jeweiligen Übertragungselement (3) unterbunden ist.
d) Das virtuell entworfene Bogenelement (2) wird computergesteuert derart in einem Stück hergestellt, dass es nach seiner Fertigstellung zumindest im Wesentlichen seine schlussendliche Form aufweist, in der es für die Vorrichtung (1) nutzbar ist.
e) Das Bogenelement (2) wird aus einem von einem Blech gebildeten Materialteil herausgearbeitet, wobei eine Dicke des Blechs dessen übrigen Abmessungen deutlich unterschreitet.

10. Verfahren nach Anspruch 9, **dadurch gekennzeichnet, dass** das Bogenelement (2) aus dem Materialteil ausgefräst oder ausgeschnitten wird.

11. Verfahren nach Anspruch 9 oder 10, **dadurch gekennzeichnet, dass** eine Dicke des Blechs weniger als 1,0 mm aufweist.

12. Verfahren nach einem der Ansprüche 9 bis 11, **dadurch gekennzeichnet, dass** das Bogenelement (2) mittels Laserschneidens oder mittels Drahterosion aus dem Blech herausgeschnitten wird.

## Claims

1. A device (1) for correcting misaligned teeth, comprising;
- an arc element (2) and
- at least two transmission elements (3),
wherein each of the transmission elements (3) is suitable for cooperating with a surface of a tooth (4) and has a coupling region (5) in which the respective transmission element (3) can be connected or is connected to the arc element (2) in a force-transmitting manner,
wherein the arc element (2) has a curved parabolic overall shape which follows a shape of a lower jaw or an upper jaw,
wherein the arc element (2) has at least one activation section (6) which is disposed between two adjacent transmission elements (3) and is configured such that in an installed condition of the device (1) in which it is coupled to the transmission elements (3), the arc element (2) is at least locally elastically deformed so that a restoring force acts in the arc element (2) which can be transferred to the transmission elements (3) by means of the coupling, wherein the arc element is configured so as to be flat, in a manner such that - at least in a non-loaded condition of the arc element (2) - a longitudinal axis (19) of the arc element (2) extends within a plane, wherein the arc element (2) comprises at least one form-fitting element (7) by means of which, in the installed condition of the device (1), the arc element (2) cooperates with a respective transmission element (3) in a form-fitting manner,
**characterized in that**
a relative movement of the arc element (2) towards the respective transmission element (3) in a direction parallel to the longitudinal axis of the arc element (2) - considered in the coupling region (5) of the transmission element (5) - is blocked so that slippage between the arc element (2) and the respective transmission element (3) is prevented.

2. The device (1) as claimed in claim 1, **characterized in that** the arc element (2) has a rectangular, preferably square cross section, wherein the lengths of the edges of the arc element (2) are preferably a maximum of 0.6 mm, more preferably a maximum of 0.5 mm.

3. The device (1) for correcting misaligned teeth as claimed in claim 1 or 2, **characterized in that** the arc element (2) is formed from a shape memory material, preferably from a nickel-titanium alloy, in particular nitinol.

4. The device (1) as claimed in claim 1 or 3, **characterized in that** the arc element (2) is configured in the form of a loop (10) or is in the shape of a meander in at least one activation section (6), so that the arc element (2) can act as a spring in the activation section (6).

5. The device (1) as claimed in claim 1 or 4, the arc element (2) having a plurality of form-fitting elements (7) which are separated from one another, wherein at least two form-fitting elements (7) correspond with each other in a manner such that, in the installed condition of the device (1), they cooperate with the same transmission element (3).

6. The device (1) as claimed in one of claims 1 to 5, **characterized in that** the at least one form-fitting element (7) is formed by a lug (8) which extends radially - relative to a longitudinal axis of the arc element (2) - wherein preferably, a corresponding transmission element (3) has a corresponding recess (9) which is engaged with the lug (8) in a form-fitting manner.

7. The device (1) as claimed in one of claims 1 to 6, **characterized in that** the arc element (2) has at least one local curvature, preferably a plurality of local curvatures, which has or have a radius of curvature of a maximum of 1.0 mm, preferably a maximum of 0.5 mm, more preferably a maximum of 0.2 mm.

8. The device (1) as claimed in one of claims 1 to 7, **characterized in that** the arc element (2) is configured in one piece.

9. A method for producing an arc element (2) for a device (1) for correcting tooth misalignments as claimed in claim 1, comprising the following steps:
a) identifying the position of a plurality of teeth (11) of the lower jaw or upper jaw of a patient;
b) generating a digital model of the teeth (11) using the identified position of the teeth (11);
c) virtually designing an arc element (2) for the device (1) with the aid of the digital model, wherein the arc element (2) has a curved parabolic overall shape which follows a shape of a lower jaw or an upper jaw, and has at least one activation section (6) which is disposed between two adjacent transmission elements (3) and is configured such that in an installed condition of the device (1) in which it is coupled to the transmission elements (3), the arc element (2) is at least locally elastically deformed so that a restoring force acts in the arc element (2) which can be transferred to the transmission elements (3) by means of the coupling, and the arc element is configured so as to be flat, in a manner such that - at least in a non-loaded condition of the arc element (2) - a longitudinal axis (19) of the arc element (2) extends within a plane and the arc element (2) comprises at least one form-fitting element (7) by means of which, in an installed condition of the device (1), the arc element (2) cooperates with a respective transmission element (3) in a form-fitting manner, wherein a relative movement of the arc element (2) towards the respective transmission element (3) in a direction parallel to the longitudinal axis of the arc element (2) - considered in the coupling region (5) of the transmission element (5) - is blocked so that slippage between the arc element (2) and the respective transmission element (3) is prevented;
d) producing the virtually designed arc element (2) in one piece by a computer controlled method in a manner such that after production is complete, it at least essentially has its final shape in which it can be used in the device (1),
e) producing the arc element (2) from a piece of sheet metal material, wherein a thickness of the sheet metal is significantly less than the other dimensions thereof.

10. The method as claimed in claim 9, **characterized in that** the arc element (2) is milled or cut from a piece of material.

11. The method as claimed in claim 9 or 10, **characterized in that** the sheet metal has a thickness of less than 1.0 mm.

12. The method as claimed in one of claims 9 to 11, **characterized in that** the arc element (2) is cut from the sheet metal by laser cutting or by wire erosion.

## Revendications

1. Dispositif (1) pour la correction de malocclusions dentaires, comprenant
- un élément arqué (2) et
- au moins deux éléments de transfert (3),
dans lequel chacun des éléments de transfert (3) est approprié pour coopérer avec une surface de dent (4) et présente une zone de couplage (5) dans laquelle l'élément de transfert (3) respectif peut être couplé ou est couplé à l'élément arqué (2) de manière à transférer une force,
dans lequel l'élément arqué (2), considéré de manière globale, présente une forme parabolique, courbée suivant une forme d'une mâchoire inférieure ou d'une mâchoire supérieure,
dans lequel l'élément arqué (2) présente au moins un tronçon d'activation (6) qui est disposé entre deux éléments de transfert (3) adjacents et ainsi formé que l'élément arqué (2), dans un état monté du dispositif (1), dans lequel il est couplé aux éléments de transfert (3), est déformé élastiquement au moins localement de sorte que dans l'élément arqué (2), une force de rappel agit qui peut être transférée aux éléments de transfert (3) au moyen du couplage,
dans lequel l'élément arqué est ainsi réalisé plat qu'un axe longitudinal (19) de l'élément arqué (2) - au moins dans un état sans force de l'élément arqué (2) - s'étend à l'intérieur d'un plan,
dans lequel l'élément arqué (2) comprend au moins un élément à complémentarité de forme (7) au moyen duquel l'élément arqué (2), dans l'état monté du dispositif (1), coopère par complémentarité de forme avec un élément de transfert (3) respectif,
**caractérisé en ce**
**qu'**un mouvement relatif de l'élément arqué (2) et de l'élément de transfert (3) respectif l'un par rapport à l'autre est - considéré dans la zone de couplage (5) de l'élément de transfert (3) - bloqué dans le sens parallèle à l'axe longitudinal de l'élément arqué (2) de telle manière qu'un glissement entre l'élément arqué (2) et l'élément de transfert (3) respectif est empêché.

2. Dispositif (1) selon la revendication 1, **caractérisé en ce que** l'élément arqué (2) présente une section rectangulaire, de préférence carrée, dans lequel des longueurs d'arête de l'élément arqué (2) font de préférence au maximum 0,6 mm, plus encore de préférence au maximum 0,5 mm.

3. Dispositif (1) pour la correction de malocclusions dentaires selon la revendication 1 ou 2, **caractérisé en ce que** l'élément arqué (2) est formé par un matériau à mémoire de forme, de préférence par un alliage nickel-titane, en particulier du Nitinol.

4. Dispositif (1) selon l'une des revendications 1 ou 3, **caractérisé en ce que** dans lequel l'élément arqué (2) est conçu sous forme d'une boucle (10) ou bien sinueux dans au moins un tronçon d'activation (6), de sorte que l'élément arqué (2) peut agir comme ressort dans le tronçon d'activation (6).

5. Dispositif (1) selon l'une des revendications 1 ou 4, l'élément arqué (2) présente une pluralité d'éléments à complémentarité de forme (7) distants l'un de l'autre, dans lequel au moins deux éléments à complémentarité de forme (7) correspondent ainsi entre eux qu'ils coopèrent avec le même élément de transfert (3) dans l'état monté du dispositif (1).

6. Dispositif (1) selon l'une des revendications 1 à 5, **caractérisé en ce que** l'au moins un élément à complémentarité de forme (7) est formé par un ergot (8) s'étendant radialement - considéré par rapport à un axe longitudinal de l'élément arqué (2) - dans lequel de préférence un élément de transfert (3) correspondant présente un évidement (9) correspondant avec lequel l'ergot (8) se met en prise par complémentarité de forme.

7. Dispositif (1) selon l'une des revendications 1 à 6, **caractérisé en ce que** l'élément arqué (2) présente au moins une courbure locale, de préférence une pluralité de courbures locales qui présente(nt) un rayon de courbure de maximum 1,0 mm, de préférence de maximum 0,5 mm, plus encore de préférence de maximum 0,2 mm.

8. Dispositif (1) selon l'une des revendications 1 à 7, **caractérisé en ce que** l'élément arqué (2) est conçu d'une seule pièce.

9. Procédé destiné à la fabrication d'un élément arqué (2) pour un dispositif (1) pour la correction de malocclusions dentaires selon la revendication 1, comprenant les étapes de procédé suivantes :
a) la position d'une pluralité de dents (11) de la mâchoire inférieure de la mâchoire supérieure d'un patient est détectée,
b) en utilisant la position des dents (11) détectée, un modèle numérique des dents (11) est établi,
c) à l'aide du modèle numérique, un élément arqué (2) pour le dispositif (1) est projeté virtuellement, dans lequel l'élément arqué (2), considéré de manière globale, présente une forme parabolique, courbée suivant une forme d'une mâchoire inférieure ou d'une mâchoire supérieure et présente au moins un tronçon d'activation (6) qui est disposé entre deux éléments de transfert (3) adjacents et ainsi formé que l'élément arqué (2), dans un état monté du dispositif (1), dans lequel il est couplé aux éléments de transfert (3), est déformé élastiquement au moins localement de sorte que dans l'élément arqué (2), une force de rappel agit qui peut être transférée aux éléments de transfert (3) au moyen du couplage, et que l'élément arqué est ainsi réalisé plat qu'un axe longitudinal (19) de l'élément arqué (2) - au moins dans un état sans force de l'élément arqué (2) - s'étend à l'intérieur d'un plan, et l'élément arqué (2) comprend au moins un élément à complémentarité de forme (7) au moyen duquel l'élément arqué, dans un état monté du dispositif (1), coopère par complémentarité de forme avec un élément de transfert (3) respectif, dans lequel un mouvement relatif de l'élément arqué (2) et de l'élément de transfert (3) respectif l'un par rapport à l'autre est - considéré dans la zone de couplage (5) de l'élément de transfert (3) - bloqué dans le sens parallèle à l'axe longitudinal de l'élément arqué (2) de telle manière qu'un glissement entre l'élément arqué (2) et l'élément de transfert (3) respectif est empêché,
d) l'élément arqué (2) projeté virtuellement est fabriqué par ordinateur en une pièce de telle façon qu'après sa fabrication, il présente au moins essentiellement sa forme finale dans laquelle il peut être utilisé pour le dispositif (1),
e) l'élément arqué (2) est fabriqué à partir d'une pièce de matériau formée par une tôle, dans lequel une épaisseur de la tôle est nettement en-dessous de ses dimensions restantes.

10. Procédé selon la revendication 9, **caractérisé en ce que** l'élément arqué (2) est fraisé ou découpé de la pièce de matériau.

11. Procédé selon la revendication 9 ou 10, **caractérisé en ce qu'**une épaisseur de la tôle est inférieure à 1,0 mm.

12. Procédé selon l'une des revendications 9 à 11, **caractérisé en ce que** l'élément arqué (2) est découpé de la tôle par découpe au laser ou par érosion à fil.
